# EUROPÄISCHE PATENTSCHRIFT

(11) **EP 3 588 450 B1**
(45) Veröffentlichungstag und Bekanntmachung des Hinweises auf die Patenterteilung: **19.07.2023**
(21) Anmeldenummer: 19175613.9
(22) Anmeldetag: 21.05.2019
(51) Int. Cl.: G07B 17/00, B41J 2/175

(54) **VERFAHREN UND SYSTEM ZUM STEUERN DER NUTZUNG EINER KARTUSCHENEINHEIT**
METHOD AND SYSTEM FOR CONTROLLING THE USE OF A CARTRIDGE UNIT
PROCÉDÉ ET SYSTÈME DE COMMANDE DE L'UTILISATION D'UNE UNITÉ DE CARTOUCHE

(30) Priorität: 28.06.2018 DE 102018115555
(43) Veröffentlichungstag der Anmeldung: 01.01.2020
(73) Patentinhaber: Francotyp-Postalia GmbH, 13089 Berlin (DE)
(72) Erfinder: HEINRICH, Clemens, 16515 Oranienburg (DE); JAUERT, Joachim, 13187 Berlin (DE); ROSENAU, Dirk, 13469 Berlin (DE); LÜNEBURG, Andreas, 16540 Hohen Neuendorf (DE)
(74) Vertreter: Cohausz & Florack

(56) Entgegenhaltungen:
- EP-A1- 1 132 868
- EP-B1- 0 825 567
- DE-A1-102011 012 874

## Beschreibung

Die vorliegende Erfindung betrifft ein System zum Drucken eines Abdrucks auf ein flaches Gut mit einer ein Verbrauchsgut, insbesondere Tinte, enthaltenden Kartuscheneinheit und einem Gutverarbeitungsgerät, insbesondere einer Frankiermaschine, wobei das Gutverarbeitungsgerät eine zur Nutzung der Kartuscheneinheit ausgebildete Druckeinrichtung und eine mit der Druckeinrichtung verbundene erste Datenverarbeitungseinheit zur Steuerung der Nutzung der Kartuscheneinheit zum Erstellen des Abdrucks umfasst. Das Gutverarbeitungsgerät ist dazu konfiguriert, ein Einsetzen der Kartuscheneinheit in die Druckeinrichtung zu erfassen. Das Gutverarbeitungsgerät ist weiterhin dazu konfiguriert, eine aktuelle Verbrauchsinformation zu erzeugen, welche für die Nutzung der Kartuscheneinheit durch die Druckeinrichtung seit dem Einsetzen repräsentativ ist. Die Kartuscheneinheit weist einen ersten Speicher auf, in dem nichtflüchtig, insbesondere unveränderbar, eine eindeutige Kartuschenidentifikation der Kartuscheneinheit gespeichert ist. Die Erfindung betrifft weiterhin ein entsprechendes Verfahren zum Steuern eines solchen Systems, sowie mindestens ein Gutverarbeitungsgerät mit einer ersten Datenverarbeitungseinrichtung und einer Kartuscheneinheit eines solchen Systems. Das mindestens eine Gutverarbeitungsgerät umfasst vorzugsweise Frankiermaschinen, Adressiermaschinen und/oder andere Geräte zur Postverarbeitung.

Bei einer Vielzahl von Anwendungen, bei denen eine physische Wiedergabe bestimmter Daten (beispielsweise ein Ausdruck der Daten oder dergleichen) erzeugt wird, werden Verbrauchsmaterialien für die Erzeugung dieser physischen Wiedergabe verwendet, die bestimmte Eigenschaften aufweisen, um eine vorgegebene Qualität der Wiedergabe zu gewährleisten und/oder gegebenenfalls im Zusammenspiel mit weiteren Merkmalen der Wiedergabe die Authentizität der wiedergegebenen Daten bzw. die Autorisierung zur Erzeugung der Wiedergabe zu belegen. So werden beispielsweise bei modernen Frankiermaschinen in der Regel spezielle, von dem betreffenden Postbeförderer vorgegebene Tinten oder Toner verwendet, um einen gültigen Frankierabdrucks zu erzeugen. Die verwendeten Tinten oder Toner können zudem bestimmte, für das menschliche Auge ohne Hilfsmittel nicht erkennbare Sicherheitsmerkmale (beispielsweise fluoreszierende Partikel oder dergleichen) aufweisen.

Um sicherzustellen, dass im Zusammenhang mit einer solchen Wiedergabe ausschließlich autorisierte Verbrauchsmaterialien verwendet werden, sind eine Reihe von Verfahren bekannt, welche gewährleisten sollen, dass nur autorisierte Kartuscheneinheiten (beispielsweise Tintenkartuschen, Farbbandkassetten, Tonerkartuschen etc.) in den betreffenden Druckeinrichtungen zur Nutzung freigegeben werden.

Unter anderem wird bei einer Reihe von lokal in der Frankiermaschine angewandten Verfahren, wie sie beispielsweise aus der EP 1 237 725 B1 bekannt sind, eine in einem Speicher der Kartuscheneinheit gespeicherte Autorisierungsinformation in der Frankiermaschine überprüft, beispielsweise wird eine digitale Signatur des Herstellers der Kartuscheneinheit über einer der Kartuscheneinheit spezifisch zugeordneten Information verifiziert. Nur wenn diese Überprüfung erfolgreich ist, wird die Nutzung der Kartuscheneinheit freigegeben. Andernfalls wird das Drucken gesperrt. Ähnliche Verfahren sind aus der EP 1 132 868 A1 und der EP 0 875 862 A2 bekannt.

Bei weiteren Verfahren, wie sie beispielsweise aus der EP 1 103 924 B1 bekannt sind, vergleicht eine Datenzentrale ein von der Frankiermaschine über ein Kommunikationsnetz gesandtes Codewort mit einer in der Datenzentrale vorhandenen Liste von gültigen Codewörtern. Wenn diese Überprüfung nicht erfolgreich ist, können Gegenmaßnahmen bis hin zum Sperren der Frankiermaschine für die Nutzung der Kartuscheneinheit eingeleitet werden. Ein ähnliches Verfahren ist weiterhin aus der DE 100 23 145 A1 bekannt. Bei einem weiteren ähnlichen Verfahren, welches aus der EP 1 103 925 B1 bekannt ist, erhält die Frankiermaschine eine Liste von gültigen Codewörtern für den Vergleich.

Aus der EP 1 103 925 A1 ist schließlich ein gattungsgemäßes Verfahren bekannt, bei dem nach der Nutzung einer autorisierten Kartuscheneinheit für eine vorgegebene Anzahl von Abdrucken die weitere Nutzung in der Frankiermaschine unterbunden wird, obwohl noch ausreichend Resttinte für eine weitere Nutzung vorhanden ist. Eine weitere Nutzung der Resttinte wird jedoch ermöglicht, wenn in einem Freigabevorgang im Zusammenspiel zwischen der Frankiermaschine und einer Datenzentrale gegen eine entsprechende Bezahlung seitens des Nutzers in einem Abrechnungsvorgang eine entsprechende Freigabe erfolgt.

Allen diesen Verfahren ist gemeinsam, dass entsprechend hoher Aufwand betrieben werden muss, um sicherzustellen, dass in der Druckeinrichtung nur autorisierte Kartuscheneinheiten betrieben werden. Dies hat vergleichsweise hohe Kosten für die einzelne Kartuscheneinheit zur Folge. Dabei besteht zudem teils, sofern überhaupt, nur ein mäßiger Schutz gegen die Verwendung von Piraterieprodukten oder von ehemals autorisierten Kartuscheneinheiten, die seitens Dritter wiederbefüllt wurden. Derartige unautorisierte Kartuscheneinheiten werden typischerweise zu deutlich niedrigeren Preisen als autorisierte Kartuscheneinheiten vertrieben, sodass insofern der wirtschaftliche Druck, eine noch stärkere Absicherung zu erzielen, weiter zunimmt und die Kosten in die Höhe treibt.

So wird bei dem aus der EP 1 103 925 A1 bekannten Speicher der Kartuscheneinheit zwar der Verbrauch oder die verbleibende Restmenge erfasst und die Nutzung der Kartuscheneinheit unterbunden, sobald eine bestimmte Restmenge erreicht wird. Es besteht jedoch in manchen Fällen die Möglichkeit, den Speicher der Verbrauchseinheit zu manipulieren. Aus der DE 10 2011 012874 A1 ist bekannt, den Füllstand einer Kartusche zu messen, in einem Speicher der Kartusche zu protokollieren und gegebenenfalls zu plausibilisieren.

Der vorliegenden Erfindung liegt daher die Aufgabe zu Grunde, ein System der eingangs genannten Art sowie ein Verfahren zum Steuern eines solchen Systems und eine Datenverarbeitungseinrichtung für ein Gutverarbeitungsgerät in einem solchen System zur Verfügung zu stellen, welche bzw. welches die oben genannten Nachteile nicht oder zumindest in geringerem Maße aufweist und insbesondere auf kostengünstige Weise einen hohen Schutz gegen die Nutzung unautorisierter Verbrauchseinheiten ermöglicht.

Die vorliegende Erfindung löst diese Aufgabe mit einem System gemäß Anspruch 1. Sie löst diese Aufgabe weiterhin mit einem Verfahren gemäß Anspruch 10.

Der vorliegenden Erfindung liegt die technische Lehre zu Grunde, dass man eine einfache und kostengünstige Weise einen hohen Schutz gegen die Nutzung unautorisierter Kartuscheneinheiten ermöglicht, wenn eine Datenverarbeitungseinheit den aktuellen Verbrauch an Druckmedium der Kartuscheneinheit nachhält und zumindest beim Eintreten nutzungsrelevanter Ereignisse zum einen ein Speichern einer entsprechenden aktuellen Nutzungsinformation logisch verknüpft mit der Kartuschenidentifikation in wenigstens einem zweiten Speicher veranlasst und zum anderen einen irreversibel beschreibbaren Speicherbereich des ersten Speichers beschreibt. Durch diese Kombination aus einer mit der Kartuschenidentifikation logisch verknüpften Dokumentation der Nutzung einer (durch die Kartuschenidentifikation eindeutig identifizierten) Kartuscheneinheit und dem irreversiblen Beschreiben des Speichers der Kartuscheneinheit ist es in vorteilhafter Weise unter anderem möglich, bereits zu Beginn eines Nutzungsintervalls ein bestimmtes Verbrauchsvolumen (über das irreversible Beschreiben) als verbraucht zu markieren, gleichzeitig aber durch das der Kartuscheneinheit eindeutig zugeordnete Nachhalten des Verbrauchs die tatsächliche Nutzung des als verbraucht markierten Verbrauchsvolumens zu ermöglichen.

Die irreversible Markierung eines Verbrauchsvolumens mittels des ersten Speichers stellt dabei in einfacher Weise sicher, dass selbst bei einer nicht autorisierten Wiederbefüllung das nachgefüllte Volumen nicht genutzt werden kann, da es über den ersten Speicher als verbraucht markiert ist und die erste Datenverarbeitungseinheit dementsprechend nur die Nutzung eines gegebenenfalls noch vorhandenen Restvolumens zulässt.

Die mit der Kartuschenidentifikation logisch verknüpfte Speicherung der Nutzungsinformation ermöglicht es zudem, zum einen zum Beispiel bei einem erneuten Einsetzen der Kartuscheneinheit in die Druckeinrichtung einen gegebenenfalls noch nicht verbrauchten Teil des (gemäß dem Zustand des ersten Speichers) als verbraucht markierten Verbrauchsvolumens dennoch zu nutzen. Weiterhin ist es möglich, die der Kartuscheneinheit eindeutig zugeordnete Nutzungsinformation nicht nur in dem Gutverarbeitungsgerät selbst zu halten, sondern gegebenenfalls (zusätzlich oder alternativ) an eine entfernte Datenzentrale zu übermitteln und dort zu halten sowie von dort aus anderen Gutverarbeitungsgeräten zur Verfügung zu stellen. Ein noch nicht verbrauchter Teil des als verbraucht markierten Verbrauchsvolumens kann anhand dieser eindeutig zugeordneten Nutzungsinformation auch in diesen anderen Gutverarbeitungsgeräten verbraucht werden.

Es versteht sich, dass es sich bei dem als verbraucht markierten Verbrauchsvolumen grundsätzlich um das gesamte nutzbare Volumen an Verbrauchsgut der Kartuscheneinheit handeln kann. Vorzugsweise ist das als verbraucht markierte Verbrauchsvolumen nur ein Teil des nutzbaren Gesamtvolumens an Verbrauchsgut (z. B. Tinte) der Kartuscheneinheit. Hierbei kann grundsätzlich eine beliebig geeignete Unterteilung des Gesamtvolumens in einzelne Verbrauchsvolumina vorgesehen sein. Diese Unterteilung ist vorzugsweise auf die Anzahl an separat beschreibbaren Speicherbereichen des ersten Speichers abgestimmt. Dabei kann grundsätzlich vorgesehen sein, dass bei einem einmaligen Verbrauch des Gesamtvolumens der Kartuscheneinheit auch sämtliche Speicherbereiche des ersten Speichers irreversibel beschrieben sind. Vorzugsweise ist jedoch vorgesehen, dass die Anzahl der Speicherbereiche des ersten Speichers größer ist als die Anzahl einzelnen Verbrauchsvolumina, in die das Gesamtvolumen der Kartuscheneinheit unterteilt ist. Hiermit ist es möglich, die Kartuscheneinheit wieder zu befüllen, wie nachfolgend noch im Detail erläutert wird.

Es versteht sich, dass die aktuelle Nutzungsinformation beliebig gestaltet sein kann, um die aktuelle Nutzung der Kartuscheneinheit zu dokumentieren. So kann es sich einfach um die aktuelle Verbrauchsinformation selbst handeln. Ebenso ist es natürlich möglich, dass es sich bei der aktuellen Nutzungsinformation um eine anhand der aktuellen Verbrauchsinformation erstellte Information über die noch in der Kartuscheneinheit verbleibende Restmenge bzw. ein noch verbleibendes Restvolumen an Druckmedium handelt.

Dabei versteht es sich, dass die Nutzungsinformation gegebenenfalls auch um weitere Informationen ergänzt werden kann. Beispielsweise kann vorgesehen sein, dass die aktuelle Nutzungsinformation mit einem ein Zeitstempel oder dergleichen versehen wird, um den Zeitpunkt ihrer Erstellung und/oder Speicherung nachvollziehbar zu machen. Ebenso ist es möglich, die Nutzungsinformation nicht nur der Kartuscheneinheit sondern auch dem Gutverarbeitungsgerät logisch zuzuordnen (beispielsweise über eine eindeutige Gutverarbeitungsgeräteidentifikation), sodass gegebenenfalls über den ersten Speicher als verbraucht markierte Verbrauchsvolumina auch nur durch das Gutverarbeitungsgerät genutzt werden können, in der die Markierung als verbraucht erfolgte.

Bei dem nutzungsrelevanten Ereignis kann es sich um beliebige Ereignisse handeln, welche für die Nutzung der Kartuscheneinheit durch die Druckeinrichtung relevant sind. Hierbei kann es sich beispielsweise um das Einsetzen der Kartuscheneinheit in die Druckeinrichtung handeln. Ebenso kann es sich um eine erstmalige Nutzung der Kartuscheneinheit nach dem Einsetzen der Kartuscheneinheit handeln oder den tatsächlichen Verbrauch des (gemäß dem Zustand des ersten Speichers) als verbraucht markierten Verbrauchsvolumens.

Weiterhin versteht es sich, dass sämtliche vorstehend oder nachfolgend beschriebene Speichervorgänge durch geeignete (hinlänglich bekannte) kryptographische Mittel (Verschlüsselung, Hash-Werte, digitale Signaturen etc.) abgesichert sein können, um die gespeicherten Werte gegen unerkannte Manipulation abzusichern.

Die Erfindung kann insbesondere von einer Kartuscheneinheit mit einem Druckkopf und einem Vorratsbehälter oder Tank für ein Verbrauchsgut ausgehen. In dem Druckkopf kann dann der erste Speicher integriert sein. Das hat den Vorteil, dass eine Manipulation des Speichers ohne Zerstören des Druckkopfes erschwert wird.

Gemäß einem Aspekt betrifft die vorliegende Erfindung daher ein System zum Drucken eines Abdrucks auf ein flaches Gut mit den Merkmalen des Anspruchs 1.

Wie bereits erwähnt, kann es sich bei dem jeweiligen nutzungsrelevanten Ereignis um beliebiges geeignetes Ereignis handeln, welches für die Nutzung der Kartuscheneinheit durch die Druckeinrichtung relevant ist. Dabei kann es sich um beliebige zeitliche oder nicht-zeitliche Ereignisse handeln. Beispielsweise kann das nutzungsrelevante Ereignis ein zeitliches Ereignis, beispielsweise der Ablauf einer vorgebbaren Zeitspanne seit der letzten Nutzung der Kartuscheneinheit sein. Vorzugsweise ist das wenigstens eine nutzungsrelevante Ereignis eine erstmalige Nutzung der Kartuscheneinheit nach dem Einsetzen in die Druckeinrichtung und/oder ein Erreichen eines vorgebbaren Verbrauchswertes seit dem Einsetzen und/oder ein Erreichen eines vorgebbaren Verbrauchswertes seit einem unmittelbar vorhergehenden nutzungsrelevanten Ereignis und/oder der Eingang eines Entnahmebefehls zum Entnehmen der Kartuscheneinheit aus der Druckeinrichtung. Bei allen diesen Ereignissen ist es von Vorteil, wenn die zugehörige aktuelle Verbrauchsinformation gespeichert wird. Zudem ist gerade das Einsetzen, das erstmalige Nutzen nach dem Einsetzen sowie das Erreichen eines bestimmten Verbrauchswertes (beispielsweise der Verbrauch eines oben genannten Verbrauchsvolumens) nach einem solchen nutzungsrelevanten Ereignis ein geeigneter Zeitpunkt, um einen Speicherbereich des ersten Speichers zu beschreiben und so ein bestimmtes Verbrauchsvolumen in der oben beschriebenen Weise in dem ersten Speicher als verbraucht zu markieren, bevor es tatsächlich verbraucht wurde. Ebenso kann natürlich auch vorgesehen sein, dass die Markierung als verbraucht erst am Ende eines Nutzungsintervalls, beispielsweise beim Entnehmen der Kartuscheneinheit oder beim Erreichen des Verbrauchswertes erfolgt.

Es versteht sich, dass grundsätzlich vorgesehen sein kann, dass der erste Speicher nur einen einzigen irreversibel beschreibbaren Speicherbereich umfasst, der bei dem Eintreten des nutzungsrelevanten Ereignisses beschrieben wird. Vorzugsweise ist jedoch vorgesehen, dass der erste Speicher eine Mehrzahl von N irreversibel beschreibbaren Speicherbereichen aufweist. Die erste Datenverarbeitungseinheit ist dann dazu konfiguriert, die Speicherbereiche in bei Eintreten nutzungsrelevanter Ereignisse in einer, insbesondere vorgebbaren, Sequenz zu beschreiben. Die Sequenz kann dabei logisch und/oder physikalisch (durch den Aufbau des ersten Speichers) vorgegeben sein. Hiermit ist es an einfacher Weise möglich, eine beliebig feine und geeignete Unterteilung des mit einer Befüllung der Kartuscheneinheit verfügbaren Gesamtvolumens in einzelne Verbrauchsvolumina vorzunehmen und deren Verbrauch einfach nachvollziehbar zu markieren.

Die Anzahl an irreversibel beschreibbaren Speicherbereichen des ersten Speichers kann grundsätzlich beliebig gewählt sein. Bevorzugt umfasst der erste Speicher eine Mehrzahl von N = 10 bis 100, vorzugsweise N = 15 bis 50, weiter vorzugsweise N = 20 bis 30, irreversibel beschreibbaren Speicherbereichen. Hiermit lässt sich mit vertretbarem Aufwand eine gute Unterteilung des Gesamtvolumens an Druckmedium der Kartuscheneinheit vornehmen.

Zusätzlich oder alternativ kann der erste Speicher physikalisch und/oder logisch in eine Mehrzahl von M Speicherbereichsgruppen mit jeweils mehreren irreversibel beschreibbaren Speicherbereichen unterteilt sein. Hiermit ist es in einfacher Weise möglich, die Kartuscheneinheit wiederbefüllbar zu gestalten, indem einer Füllung (also einem nach einer vollständigen Befüllung verfügbaren Gesamtvolumen) jeweils eine Speicherbereichsgruppe zugeordnet wird, deren Speicherbereiche dann nach Verbrauch dieses Gesamtvolumens irreversibel beschrieben sind. Nach einem erneuten Befüllen kann dann eine weitere Speicherbereichsgruppe genutzt werden, um den Verbrauch des nachgefüllten Gesamtvolumens zu dokumentieren, wie nachfolgend im Zusammenhang mit bevorzugten Varianten noch näher beschrieben wird.

Auch hier kann die Anzahl an Speicherbereichsgruppen des ersten Speichers und/oder die Anzahl der einzelnen Speicherbereiche einer solchen Speicherbereichsgruppe grundsätzlich beliebig gewählt sein. Vorzugsweise umfasst der erste Speicher eine Mehrzahl von M = 2 bis 20, vorzugsweise M = 3 bis 10, weiter vorzugsweise M = 5 bis 8, Speicherbereichsgruppen. Jede Speicherbereichsgruppe umfasst vorzugsweise Z = 2 bis 20, vorzugsweise Z = 3 bis 10, weiter vorzugsweise Z = 4 bis 8, Speicherbereiche. Hiermit ist eine ausreichend feine Unterteilung des ersten Speichers bzw. der einzelnen Speicherbereichs Gruppen möglich mit einer einfachen Begrenzung der Anzahl der Wiederbefüllungen der Kartuscheneinheit.

Es versteht sich weiterhin, dass der einzelne irreversibel beschreibbare Speicherbereich grundsätzlich eine beliebige geeignete Größe aufweisen kann. Insbesondere kann er mehrere Bit umfassen, die gegebenenfalls beim Beschreiben in einer bestimmten Sequenz bzw. in einem bestimmten vorgegebenen Muster gesetzt werden. Vorzugsweise weist wenigstens ein irreversibel beschreibbarer Speicherbereich des ersten Speichers, insbesondere jeder irreversibel beschreibbare Speicherbereich des ersten Speichers, wenigstens ein Bit, insbesondere genau ein Bit, auf. Hiermit lässt sich eine besonders kostengünstige und kompakte Konfiguration erzielen.

Bei bevorzugten Varianten ist wenigstens ein Teil der Speicherbereiche physikalisch und/oder logisch zu einer Speicherbereichsgruppe zusammengefasst, die wenigstens einen ersten Speicherbereich und wenigstens einen zweiten Speicherbereich aufweist. Die Datenverarbeitungseinheit ist dann dazu konfiguriert, bei Eintreten eines nutzungsrelevanten Ereignisses einen ersten Speicherbereich zu beschreiben und eine Nutzung der Kartuscheneinheit durch die Druckeinrichtung zu blockieren, wenn alle ersten Speicherbereiche der Speicherbereichsgruppe beschrieben sind und der wenigstens eine zweite Speicherbereich der Speicherbereichsgruppe nicht beschrieben ist. Hiermit ist es beispielsweise in einfacher Weise möglich, über den zweiten Speicherbereich erkennbar zu machen, dass ein verfügbares Gesamtvolumen der Kartuscheneinheit verbraucht ist und noch keine autorisierte Wiederbefüllung vorliegt. Hierbei versteht es sich, dass wie oben dargelegt bei einem Beschreiben des ersten Speicherbereichs zu Beginn des Nutzungsintervalls (also zu Beginn der Nutzung des zugeordneten Verbrauchsvolumens) über die aktuelle Nutzungsinformation natürlich noch einen tatsächlichen Verbrauch des Verbrauchsvolumens zu ermöglichen, welches dem letzten ersten Speicherbereich der Speicherbereichsgruppe zugeordnet ist.

Weiterhin kann vorgesehen sein, dass erst wenn der wenigstens eine zweite Speicherbereich beschrieben ist, zur Verwendung einer weiteren Speicherbereichsgruppe übergegangen werden kann, welche dann ebenfalls mit dem Verbrauch Schritt für Schritt (bzw. erster Speicherbereich für erster Speicherbereich) beschrieben wird um den Verbrauch des nachgefüllten Druckmediums zu dokumentieren.

Hierbei kann grundsätzlich vorgesehen sein, dass auch der wenigstens eine zweite Speicherbereich durch die erste Datenverarbeitungseinheit des Gutverarbeitungsgeräts beschrieben werden kann. Hierbei kann durch entsprechende Maßnahmen sichergestellt sein, dass das Beschreiben nur bei Vorliegen einer entsprechenden Autorisierung erfolgt. Vorzugsweise ist die erste Datenverarbeitungseinheit und/oder der wenigstens eine zweite Speicherbereich derart konfiguriert, dass der wenigstens eine zweite Speicherbereich nicht durch die erste Datenverarbeitungseinheit beschreibbar ist. Hiermit kann in einfacher Weise sichergestellt werden, dass nur ein autorisierter Befüller der Kartuscheneinheit diese für einen weiteren Verbrauchszyklus durch beschreiben des wenigstens einen zweiten Speicherbereichs freigeben kann.

Bei weiteren bevorzugten Varianten ist wenigstens ein erster Teil der Speicherbereiche physikalisch und/oder logisch zu einer ersten Speicherbereichsgruppe zusammengefasst und wenigstens ein zweiter Teil der Speicherbereiche physikalisch und/oder logisch zu einer zweiten Speicherbereichsgruppe zusammengefasst, wobei die jeweilige Speicherbereichsgruppe wenigstens einen ersten Speicherbereich und wenigstens einen zweiten Speicherbereich aufweist. Die erste Datenverarbeitungseinheit ist dann dazu konfiguriert, eine weitere Nutzung der Kartuscheneinheit durch die Druckeinrichtung freizugeben, wenn alle ersten und zweiten Speicherbereiche der ersten Speicherbereichsgruppe beschrieben sind und die zweite Speicherbereichsgruppe wenigstens einen unbeschriebenen ersten Speicherbereich aufweist. Hiermit ist insbesondere der oben beschriebene Übergang zur Verwendung der zweiten Speicherbereichsgruppe nach autorisierter Wiederbefüllung der Kartuscheneinheit möglich. Die erste Datenverarbeitungseinheit ist dann bevorzugt dazu konfiguriert, bei Eintreten eines nutzungsrelevanten Ereignisses nach erstmaligem Erfassen eines beschriebenen zweiten Speicherbereiches der ersten Speicherbereichsgruppe einen ersten Speicherbereich der zweiten Speicherbereichsgruppe zu beschreiben, mithin also zur Nutzung der zweiten Speicherbereichsgruppe überzugehen.

Bei bestimmten Varianten kann vorgesehen sein, dass wenigstens ein Teil der Speicherbereiche physikalisch und/oder logisch zu wenigstens einer Speicherbereichsgruppe zusammengefasst ist, die wenigstens einen ersten Speicherbereich und wenigstens einen zweiten Speicherbereich aufweist, wobei die Speicherbereiche dazu konfiguriert sind, dass ein erster Speicherbereich durch die erste Datenverarbeitungseinheit beschreibbar ist und ein zweiter Speicherbereich nicht durch die erste Datenverarbeitungseinheit, sondern nur durch einen autorisierten Nachfüller der Kartuscheneinheit beschreibbar ist. Auch hiermit kann in einfacher Weise sichergestellt werden, dass nur autorisiert wiederbefüllte Kartuscheneinheiten verwendet werden können.

Bei bestimmten vorteilhaften Varianten ist die Datenverarbeitungseinheit dazu konfiguriert, bei erstmaliger Nutzung der Kartuscheneinheit nach dem Einsetzen und/oder bei Erreichen eines vorgebbaren Verbrauchswertes einen der Speicherbereiche zu beschreiben. Weiterhin ist die erste Datenverarbeitungseinheit dazu konfiguriert, ein Speichern einer (gegebenenfalls eindeutigen) Speicherbereichsidentifikation des beschriebenen Speicherbereichs logisch verknüpft mit der Kartuschenidentifikation in dem wenigstens einen zweiten Speicher zu veranlassen. Hiermit ist eine Dokumentation der beschriebenen Speicherbereiche in dem zweiten Speicher möglich, die nachfolgend in geeigneter Weise genutzt werden kann. Hierbei ist es insbesondere möglich, dass die Datenverarbeitungseinheit dazu konfiguriert ist, ein Speichern der Speicherbereichsidentifikation des beschriebenen Speicherbereichs logisch verknüpft mit einer eindeutigen Gutverarbeitungsgeräteidentifikation des Gutverarbeitungsgeräts zu veranlassen. In diesem Fall kann der Speicherbereich bzw. das ihm zugeordnete Verbrauchsvolumen seinerseits dem zugeordnet werden. Hiermit ist es möglich, dieses dem Speicherbereich zugeordnete Verbrauchsvolumen für das jeweilige Gutverarbeitungsgerät zu reservieren und dessen Verbrauch nachfolgend nur durch das zugeordnete Gutverarbeitungsgerät freizugeben. Ein Verbrauch eines solchen reservierten Verbrauchsvolumens kann dann in einer anderen Druckeinrichtung blockiert werden.

Bei bestimmten Varianten kann die erste Datenverarbeitungseinheit dazu konfiguriert sein, dem beschriebenen Speicherbereich eine Verbrauchsmengeninformation logisch zuzuordnen, die für eine dem beschriebenen Speicherbereich zugeordnete Verbrauchsmenge an Verbrauchsgut, also beispielsweise Tinte oder einem anderem Verbrauchsgut (Toner etc.), der Kartuscheneinheit repräsentativ ist, und eine Nutzung der Kartuscheneinheit in Abhängigkeit von der Verbrauchsmengeninformation und der aktuellen Verbrauchsinformation bis zum Erreichen der dem beschriebenen Speicherbereich zugeordneten Verbrauchsmenge freizugeben. Hiermit kann eine vorteilhafte Zuordnung eines beschriebenen Speicherbereichs des ersten Speichers zu einem bestimmten vorgebbaren Verbrauchsvolumen realisiert werden.

Es versteht sich, dass der wenigstens eine zweite Speicher grundsätzlich einer beliebigen geeigneten Komponente der Anordnung zugeordnet sein kann. Bei bestimmten Varianten kann der wenigstens eine zweite Speicher ein Speicher des Gutverarbeitungsgeräts selbst sein. Mithin kann wie oben beschrieben die der Kartuscheneinheit logisch zugeordnete Speicherung der aktuellen Nutzungsinformation direkt in dem Gutverarbeitungsgerät erfolgen.

Zusätzlich oder alternativ kann der wenigstens eine zweite Speicher aber auch ein Speicher einer von dem Gutverarbeitungsgerät entfernten Datenzentrale sein, das mit der ersten Datenverarbeitungseinheit über ein Kommunikationsnetz verbindbar ist (mithin können also gegebenenfalls zwei zweite Speicher vorhanden sein, einer im Gutverarbeitungsgerät und einer in der Datenzentrale). In diesem Fall kann die erste Datenverarbeitungseinheit dazu konfiguriert sein, die aktuelle Nutzungsinformation verknüpft mit der Kartuschenidentifikation und einer eindeutigen Gutverarbeitungsgeräteidentifikation des Gutverarbeitungsgeräts an die entfernte Datenzentrale zu übermitteln. Hiermit kann dann die oben beschriebene Zuordnung der Nutzung der Kartuscheneinheit zu einem bestimmten Gutverarbeitungsgerät erfolgen.

Wie bereits erwähnt, kann die aktuelle Nutzungsinformation einfach der aktuellen Verbrauchsinformation entsprechen. Alternativ kann die aktuelle Nutzungsinformation eine Restmengeninformation sein, die für die verbleibende Restmenge an Verbrauchsgut (z. B. Tinte) der Kartuscheneinheit repräsentativ ist und unter Verwendung der aktuellen Verbrauchsinformation ermittelt wurde. In beiden Fällen kann eine aussagekräftige Information realisiert werden, welche nachfolgend vorteilhaft genutzt werden kann.

Bei bestimmten Varianten kann vorgesehen sein, dass der wenigstens eine zweite Speicher jeweils lediglich die letzte aktuelle Nutzungsinformation nebst der zugehörigen Kartuschenidentifikation umfasst. Vorzugsweise ist der wenigstens eine zweite Speicher dazu konfiguriert, mehrere Kartuschendatensätze zu speichern, wobei jeder Kartuschendatensatz wenigstens eine Nutzungsinformation und eine Kartuschenidentifikation für eine Kartuscheneinheit umfasst. Hiermit ist es möglich, Kartuschendatensätze für unterschiedliche Kartuscheneinheiten zu speichern, die in dem System genutzt werden. Dabei ist es insbesondere möglich, dass der Kartuschendatensatz wenigstens eine der Nutzungsinformation zugeordnete eindeutige Gutverarbeitungsgeräteidentifikation des Gutverarbeitungsgeräts umfasst, aus der aktuelle Nutzungsinformation stammt. Hiermit ist die oben bereits beschriebene Zuordnung der Nutzung einzelner Kartuscheneinheiten zu einzelnen Gutverarbeitungsgeräten möglich.

Bei bestimmten Varianten kann vorgesehen sein, dass die erste Datenverarbeitungseinheit dazu konfiguriert ist, ausgelöst durch ein Einsetzen der Kartuscheneinheit in das Gutverarbeitungsgerät unter Verwendung der Kartuschenidentifikation von einer entfernten Datenzentrale eine der Kartuscheneinheit zugeordnete gespeicherte Restmengeninformation abzufragen, die für eine verbleibende Restmenge an Verbrauchsgut der Kartuscheneinheit repräsentativ ist. In diesem Fall kann die erste Datenverarbeitungseinheit dann dazu konfiguriert sein, eine Nutzung der Kartuscheneinheit in Abhängigkeit von der erhaltenen Restmengeninformation und der aktuellen Verbrauchsinformation bis zum Erreichen einer vorgebbaren minimalen Restmenge freizugeben. Mit anderen Worten ist es hiermit in vorteilhafter Weise möglich, den Verbrauch aus der Kartuscheneinheit gegebenenfalls auch über deren Nutzung in mehreren Gutverarbeitungsgeräten nachzuverfolgen und die Nutzung der demgemäß verbleibenden Restmenge freizugeben.

Hierbei kann insbesondere vorgesehen sein, dass die Datenverarbeitungseinheit dazu konfiguriert ist, zumindest bei Eintreten des wenigstens einen nutzungsrelevanten Ereignisses eine aktualisierte Restmengeninformation unter Verwendung der erhaltenen Restmengeninformation und der aktuellen Verbrauchsinformation zu ermitteln und als die aktuelle Nutzungsinformation an die entfernte Datenzentrale zu übermitteln. Mithin kann also in vorteilhafter Weise zu bestimmten Zeitpunkten bzw. bei Eintreten bestimmter Ereignisse eine Aktualisierung der Restmengeninformation in der entfernten Datenzentrale erfolgen.

Bei bestimmten besonders vorteilhaften Varianten kann vorgesehen sein, dass die erste Datenverarbeitungseinheit dazu konfiguriert ist, nach dem Einsetzen der Kartuscheneinheit in das Gutverarbeitungsgerät bis zum Erhalt der abgefragten gespeicherten Restmengeninformation von der entfernten Datenzentrale eine Nutzung der Kartuscheneinheit nur bis zum Erreichen eines Standardverbrauchs freizugeben. Hiermit ist es in vorteilhafter Weise möglich, auch ohne unmittelbare Verbindung zur Datenzentrale zunächst eine Nutzung der Kartuscheneinheit freizugeben und so einerseits Verzögerungen bei der Nutzung zu vermeiden, andererseits aber eine nicht autorisierte übermäßige Nutzung zu verhindern. Dabei ist vorzugsweise vorgesehen, dass der Standardverbrauch höchstens der minimalen Restmenge entspricht, vorzugsweise kleiner ist als die minimale Restmenge. Hierdurch kann in einfacher und zuverlässiger Weise ein vollständiges Entleeren der Kartuscheneinheit vermieden werden.

Bei bestimmten Varianten der Anordnung ist eine von dem Gutverarbeitungsgerät entfernte Datenzentrale vorgesehen, die über ein Kommunikationsnetz mit der Datenverarbeitungseinheit verbindbar ist und den wenigstens einen zweiten Speicher umfasst. Hierbei kann insbesondere vorgesehen sein, dass die Datenzentrale und die erste Datenverarbeitungseinheit dazu konfiguriert sind, zur Freigabe der Nutzung der Kartuscheneinheit durch das Gutverarbeitungsgerät unter Verwendung der Kartuschenidentifikation auf die der Kartuscheneinheit logisch zugeordnete Nutzungsinformation aus dem wenigstens einen zweiten Speicher zuzugreifen. Hiermit kann in einfacher Weise eine nicht autorisierte Nutzung bzw. eine übermäßige Nutzung der Kartuscheneinheit vermieden werden.

Die vorliegende Erfindung betrifft weiterhin eine Datenverarbeitungseinrichtung, die als die erste Datenverarbeitungseinheit des erfindungsgemäßen Systems ausgebildet ist. Ebenso betrifft sie eine Datenverarbeitungseinrichtung, die als die Datenzentrale des erfindungsgemäßen Systems ausgebildet ist und den wenigstens einen zweiten Speicher umfasst. Weiterhin betrifft die vorliegende Erfindung eine Kartuscheneinheit, die als die Kartuscheneinheit des erfindungsgemäßen Systems ausgebildet ist, wobei der erste Speicher der Kartuscheneinheit insbesondere eine Mehrzahl von N irreversibel beschreibbaren Speicherbereichen aufweist. Hiermit lassen sich die oben im Zusammenhang mit dem erfindungsgemäßen System beschriebenen Vorteile und Varianten in demselben Maße realisieren, sodass insoweit zur Vermeidung von Wiederholungen auf die obigen Ausführungen verwiesen wird.

Die vorliegende Erfindung betrifft schließlich ein Verfahren zum Steuern eines Systems zum Drucken eines Abdrucks auf ein flaches Gut, wobei das System eine ein Verbrauchsgut, insbesondere Tinte, haltende Kartuscheneinheit und ein Gutverarbeitungsgerät, insbesondere eine Frankiermaschine, umfasst, das eine zur Nutzung der Kartuscheneinheit ausgebildete Druckeinrichtung und eine mit der Druckeinrichtung verbundene erste Datenverarbeitungseinheit zur Steuerung der Nutzung der Kartuscheneinheit zum Drucken des Abdrucks umfasst. Hierbei erfasst das Gutverarbeitungsgerät ein Einsetzen der Kartuscheneinheit in die Druckeinrichtung. Weiterhin erzeugt das Gutverarbeitungsgerät eine aktuelle Verbrauchsinformation, welche für die Nutzung der Kartuscheneinheit durch die Druckeinrichtung seit dem Einsetzen repräsentativ ist. Dabei ist in einem ersten Speicher der Kartuscheneinheit nichtflüchtig, insbesondere unveränderbar, eine eindeutige Kartuschenidentifikation der Kartuscheneinheit gespeichert. Die erste Datenverarbeitungseinheit veranlasst zumindest bei Eintreten wenigstens eines vorgebbaren nutzungsrelevanten Ereignisses ein Speichern einer mittels der aktuellen Verbrauchsinformation generierten aktuellen Nutzungsinformation logisch verknüpft mit der Kartuschenidentifikation in wenigstens einem zweiten Speicher, wobei das nutzungsrelevante Ereignis für die Nutzung der Kartuscheneinheit durch die Druckeinrichtung relevant ist. Schließlich beschreibt die erste Datenverarbeitungseinheit bei Eintreten des nutzungsrelevanten Ereignisses einen irreversibel beschreibbaren Speicherbereich des ersten Speichers. Auch hiermit lassen sich die oben im Zusammenhang mit dem erfindungsgemäßen System beschriebenen Vorteile und Varianten in demselben Maße realisieren, sodass insoweit zur Vermeidung von Wiederholungen auf die obigen Ausführungen verwiesen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt.
- Figur 1: ist eine schematische Darstellung einer bevorzugten Ausführungsform des erfindungsgemäßen Systems, mit welcher eine bevorzugte Variante des erfindungsgemäßen Verfahrens durchgeführt werden kann.
- Figur 2: ist ein Ablaufdiagramms einer bevorzugten Variante des erfindungsgemäßen Verfahrens, welches mit dem System aus Figur 1 durchgeführt werden kann.
- Figur 3: zeigt in den Teilen A bis F einzelne Zustände des ersten Speichers der Kartuscheneinheit aus Figur 1.

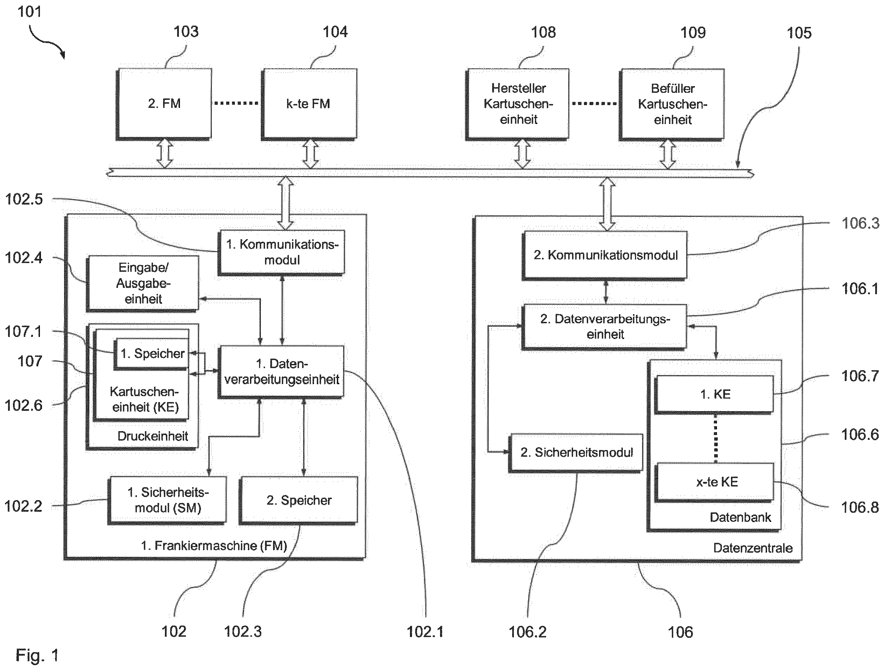

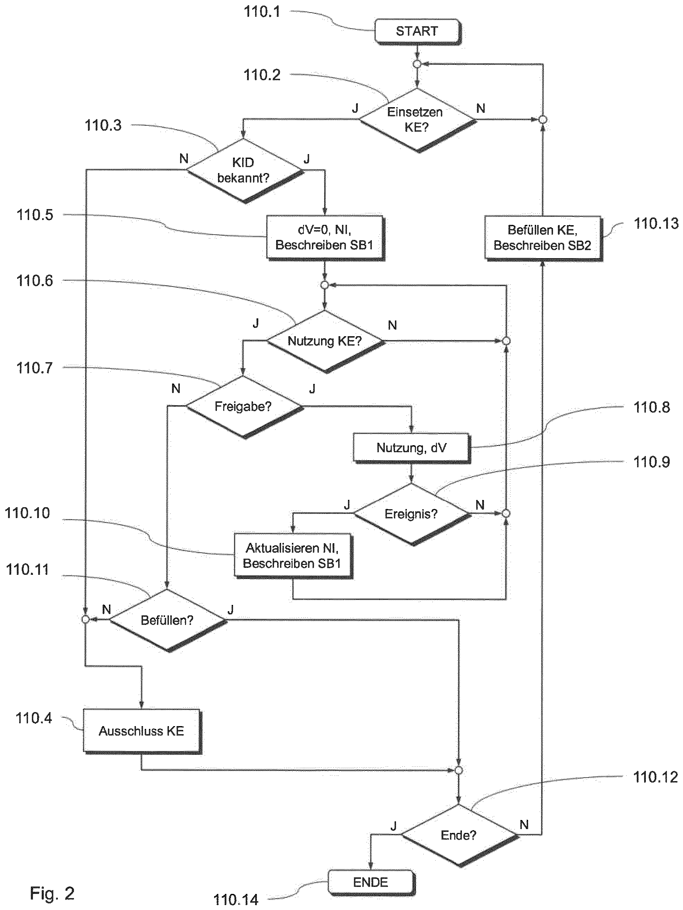

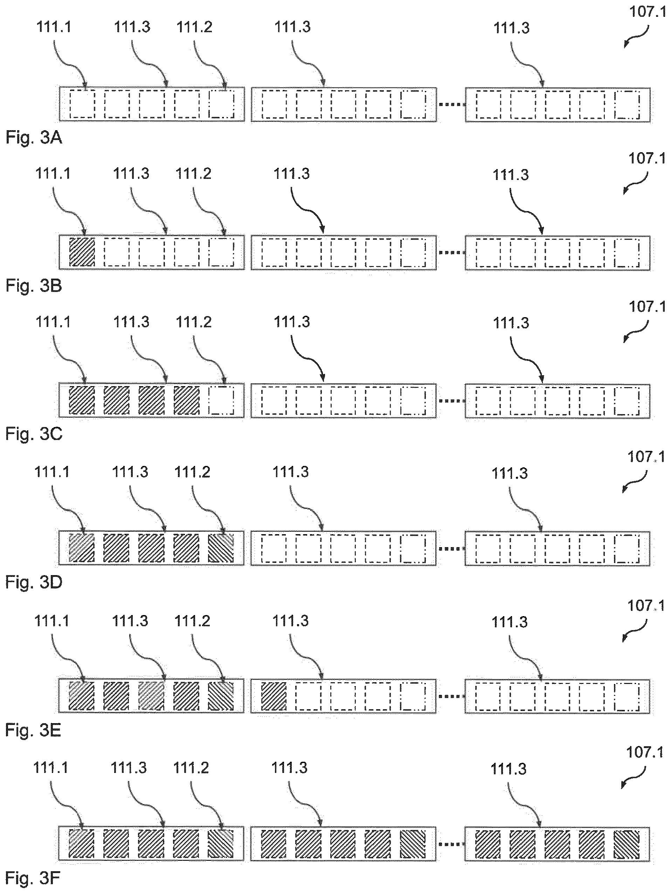

Im Folgenden wird unter Bezugnahme auf die Figuren 1, 2 und 3A bis 3F (auf die im Folgenden auch gemeinsam als Figur 3 Bezug genommen wird) eine bevorzugte Ausführungsform des erfindungsgemäßen Systems 101, mit welcher eine bevorzugte Variante des erfindungsgemäßen Verfahrens durchgeführt wird.

Wie Figur 1 zu entnehmen ist, umfasst das System 101 eine Reihe von *k* Gutverarbeitungsgeräten in Form von Frankiermaschinen (FM), zu der unter anderem eine erste Frankiermaschine 102, eine zweite Frankiermaschine 103 und eine k-te Frankiermaschine 104 gehören. Die Frankiermaschinen 102 bis 104 können jeweils über eine Kommunikationsverbindung, beispielsweise ein Datennetz 105 (z. B. das Internet), mit einer entfernten Datenzentrale 106 verbunden werden.

Die Frankiermaschine 102 umfasst unter anderem eine erste Datenverarbeitungseinheit in Form eines ersten Prozessors 102.1, ein erstes Sicherheitsmodul 102.2, einen zweiten Speicher 102.3, eine Eingabe/Ausgabeeinheit 102.4, ein Kommunikationsmodul 102.5 sowie eine Verbrauchseinrichtung in Form einer Druckeinrichtung 102.6 (welche nachfolgend auch als Druckmodul 102.6 bezeichnet wird), die jeweils mit dem ersten Prozessor 102.1 verbunden sind.

Das Druckmodul 102.6 dient in herkömmlicher Weise dazu, gesteuert durch den Prozessor 102.1 einen Frankierabdruck für ein Poststück zu generieren. Hierzu umfasst es neben einer (nicht näher dargestellten) mit dem Prozessor 102.1 verbundenen Druckkopfsteuerung einen durch die Druckkopfsteuerung angesteuerten Druckkopf. Der Druckkopf ist im vorliegenden Fall Bestandteil einer in das Druckmodul 102.6 eingesetzten Kartuscheneinheit (KE) in Form einer Tintenkartusche 107. Es versteht sich jedoch, dass bei anderen Varianten auch eine beliebige andere Drucktechnologie bzw. ein beliebiges anderes Verbrauchsgut (Farbband, Toner etc.) anstelle von Tinte vorgesehen sein kann.

Die Tintenkartusche 107 hält in einem Tank mit dem Verbrauchsgut, vorzugsweise eine von dem Beförderer der Poststücke vorgegebene Tinte, die zum Erzeugen der Frankierabdrucke verwendet. Die Tinte kann sich durch eine spezielle Farbe (z. B. das postalische Blau der Deutsche Post AG) aber auch weitere so genannte Sicherheitsmerkmale (wie z. B. fluoreszierende Partikel oder dergleichen) auszeichnen.

Es versteht sich, dass bei anderen Varianten der Erfindung auch vorgesehen sein kann, dass der Druckkopf als fester Bestandteil des Druckmoduls ausgeführt ist und nur das Verbrauchsgut (also z. B. Tinte, Toner, Farbband etc.) in der Kartuscheneinheit (KE) gehalten wird.

Die Tintenkartusche 107 umfasst weiterhin einen ersten Speicher 107.1, der im vollständig in das Druckmodul 102.6 eingesetzten Zustand der Tintenkartusche 107 über eine entsprechende Kontaktiereinheit mit dem ersten Prozessor 102.1 verbunden ist. Der erste Speicher 107.1 und/oder die Kontaktiereinheit kann dabei so an der Tintenkartusche 107 angebracht sein, dass der Druckkopf der Tintenkartusche 107 nicht mehr korrekt angesteuert werden kann, wenn der erste Speicher 107.1 physisch manipuliert wurde, also beispielsweise entfernt und erneut angebracht oder durch einen anderen Speicher ersetzt wurde. Insbesondere kann der erste Speicher 107.1 integraler Bestandteil der Einheit sein, welche auch die Düsen des Druckkopfes ausbildet. Ein solcher Sicherungsmechanismus kann bei anderen Varianten der Erfindung aber auch fehlen.

Das erste Sicherheitsmodul 102.2 dient in üblicher Weise dazu, die für die Frankierung erforderlichen sicherheitsrelevanten postalischen Dienste, wie beispielsweise die sichere Abrechnung der Frankierwerte aber auch die kryptographische Absicherung bestimmter postalischer Daten, zur Verfügung zu stellen. Weiterhin ermöglicht das erste Sicherheitsmodul 102.2 die Durchführung kryptographischer Operationen zum Zwecke der Absicherung von weiteren Daten, der Absicherung der Kommunikation über das Datennetz 105 sowie der Entschlüsselung und Verifizierung empfangener kryptographisch abgesicherter Daten.

Für die Durchführung kryptographischer Operationen, insbesondere die sichere Abrechnung der Frankierwerte umfasst das erste Sicherheitsmodul 102.2 in hinlänglich bekannter Weise einen Prozessor, ein Kryptographiemodul zur Durchführung kryptographischer Operationen (unter Verwendung kryptographischer Algorithmen und Parameter) sowie entsprechende (gegebenenfalls redundant vorhandene) Register für die Speicherung der Abrechnungsdaten, die in einem physikalisch und logisch vor unbefugtem Zugriff gesicherten Bereich angeordnet sind.

Die Datenzentrale 106 umfasst eine zweite Datenverarbeitungseinheit 106.1, ein zweites Sicherheitsmodul 106.2, ein Kommunikationsmodul 106.3, eine erste Datenbank 106.4, eine zweite Datenbank 106.5 und eine dritte Datenbank 106.6, die jeweils mit der zweiten Verarbeitungseinheit 106.1 verbunden sind. Das zweite Sicherheitsmodul 106.2 stellt dabei in hinlänglich bekannter Weise sicherheitsrelevante Dienste, wie beispielsweise die kryptographische Absicherung, Entschlüsselung und Verifizierung bestimmter postalischer oder nicht-postalischer Daten oder die Absicherung der Kommunikation über das Datennetz 105 zur Verfügung.

Die Datenzentrale 106 kann weiterhin über das Datennetz 105 mit einer Reihe von *n* entfernten Datenzentralen von Herstellern bzw. autorisierten Befüllern von Kartuscheneinheiten (KE), also Tintenkartuschen 107 verbunden werden. Hierzu gehören unter anderem eine erste Datenzentrale 108 eines Herstellers und eine Datenzentrale 109 eines autorisierten Befüllers.

Wie im Folgenden anhand der ersten Frankiermaschine 102 (stellvertretend für alle übrigen Frankiermaschinen) erläutert werden soll, kann mit der Anordnung 101 für die erste Frankiermaschine 102 ein erfindungsgemäßes Verfahren zur Steuerung des Druckens eines Abdrucks auf ein flaches Gut unter Nutzung der Tintenkartusche 107 in dem Druckmodul 102.6 der ersten Frankiermaschine 102 durchgeführt werden.

Zunächst wird in einem Schritt 110.1 der Verfahrensablauf des erfindungsgemäßen Verfahrens gestartet. In einem Schritt 110.2 überprüft der erste Prozessor 102.1 dann, ob eine Tintenkartusche 107 in das Druckmodul 102.6 eingesetzt wurde.

Ist dies der Fall, überprüft der Prozessor 102.1 in einem Schritt 110.3, ob es sich um eine bekannte Tintenkartusche 107 handelt. Hierzu liest der Prozessor aus dem ersten Speicher 107.1 eine eindeutige Kartuschenidentifikation KID aus, die (in hinlänglich bekannter Weise) irreversibel in dem ersten Speicher 107.1 gespeichert wurde. Die ausgelesene Kartuschenidentifikation KID wird mit einer Mehrzahl von Kartuschendatensätzen KDS abgeglichen, welche in dem zweiten Speicher 102.3 der Frankiermaschinen 102 abgelegt sind. Jeder Kartuschendatensatz KDS umfasst für bekannte Tintenkartuschen 107 deren eindeutige Kartuschenidentifikation KID, einen zuletzt erfassten aktuellen Verbrauch dV und eine aktuelle Nutzungsinformation NI in Form einer Restmengeninformation, welche für die zuletzt verfügbare nutzbare Restmenge an Tinte in der Tintenkartusche 107.

Im vorliegenden Beispiel kann der Kartuschendatensatz KDS zusätzlich eine der Frankiermaschine 102 zugeordnete eindeutige Gutverarbeitungsgeräteidentifikation in Form einer Frankiermaschinenidentifikation FMID umfassen, anhand derer erkenntlich ist, dass die Tintenkartusche 107 zuvor bereits einmal in die Frankiermaschinen 102 eingesetzt wurde. Es versteht sich, dass der Kartuschendatensatz KDS bei bestimmten Varianten mehrere Frankiermaschinenidentifikationen umfassen kann, wenn die Tintenkartusche 107 zuvor bereits in mehrere unterschiedliche Frankiermaschinen eingesetzt war. Ebenso versteht es sich, dass bei anderen Varianten des Kartuschendatensatzes KDS eine solche Frankiermaschinenidentifikation FMID auch völlig fehlen kann.

Im vorliegenden Beispiel ist der Kartuschendatensatz KDS in hinlänglich bekannter Weise (beispielsweise durch eines der Sicherheitsmodule 102.2, 106.2) gegen unerkannte Manipulation abgesichert, beispielsweise mit einer digitalen Signatur versehen. Es versteht sich jedoch, dass bei anderen Varianten ein solcher Sicherungsmechanismus auch fehlen kann.

Der Kartuschendatensatz KDS kann im vorliegenden Beispiel generiert worden sein, wenn die Tintenkartusche 107 zum ersten Mal in die Frankiermaschine 102 eingesetzt wurde. Hierbei kann die Frankiermaschinen 102 über das Netzwerk 105 eine Kommunikation mit der Datenzentrale 107 aufbauen, um entsprechende Daten (Kartuschenidentifikation KID, Nutzungsinformation NI) von der Datenzentrale 106 abzufragen, welche in einer Datenbank 106.6 der Datenzentrale 106 abgelegt sind, die einen weiteren zweiten Speicher im Sinne der vorliegenden Erfindung darstellt. Die Daten der Datenbank 106.6 können dabei aus den Datenzentralen 108 und 109 des Herstellers bzw. Befüllers der Tintenkartusche 107 stammen. So kann beispielsweise ein Hersteller mittels einer Datenzentrale 108 einen initialen Kartuschendatensatz KDS für eine neu hergestellte den Tintenkartusche 107 an die Datenzentrale 106 übermitteln. Gleiches gilt für einen autorisierten Befüller der Tintenkartusche 107, der nach einem Befüllen einen aktualisierten Kartuschendatensatz KDS aus seiner Datenzentrale 109 an die Datenzentrale 106 übermittelt.

Liegt in dem zweiten Speicher 102.3 der Frankiermaschine 102 kein der Kartuschenidentifikation KID der Tintenkartusche 107 entsprechender Kartuschendatensatz KDS vor, fragt die Frankiermaschine 102 in dem Schritt 110.3 weiterhin unter Verwendung der Kartuschenidentifikation KID die Datenzentrale 106 ab, um den zugehörigen Kartuschendatensatz KDS zu erhalten.

Schlägt diese Anfrage fehl, kann also auch in der Datenzentrale 106 kein entsprechender Kartuschendatensatz KDS lokalisiert werden, wird die Tintenkartusche 107 in einem Schritt 110.4 von der Nutzung ausgeschlossen.

Wird andernfalls in dem Schritt 110.3 ein zugehöriger Kartuschendatensatz KDS aufgefunden, setzt der Prozessor 102.1 der Frankiermaschine 102 in einem Schritt 110.5 den aktuellen Verbrauchswert dV = 0, lädt die aktuelle Nutzungsinformation NI aus dem Kartuschendatensatz KDS und beschreibt einen irreversibel beschreibbaren ersten Speicherbereich 111.1 des ersten Speichers 107.1 (siehe Figur 3).

in einem Schritt 110.6 überprüft der Prozessor 102.1 dann, ob eine Nutzung der Tintenkartusche 107 erfolgen soll. Hierbei kann es sich um einen Druckauftrag zum Erzeugen eines Abdrucks handeln. Ebenso kann es sich bei der Nutzung aber auch um einen Reinigungsvorgang der Tintenkartusche 107 handeln, bei dem ebenfalls Tinte aus der Tintenkartusche verbraucht wird.

Soll eine solche Nutzung erfolgen, überprüft der Prozessor 102.1 in einem Schritt 110.7 ob eine Freigabe für die Nutzung der Tintenkartusche 107 vorliegt, wie dies nachfolgend noch näher beschrieben wird. Liegt eine Freigabe vor, erfolgt die Nutzung der Tintenkartusche 107 in einem Schritt 110.8. Dabei wird die aktuelle Verbrauchsinformation dV um einen dem tatsächlichen Verbrauch an Tinte entsprechenden Wert erhöht.

In einem nachfolgenden Schritt 110.9 wird dann überprüft ob ein nutzungsrelevantes Ereignis NRE vorliegt, wie dies nachfolgend ebenfalls noch näher beschrieben wird. Ist dies nicht der Fall, wird zurück zum Schritt 110.6 gesprungen. Andernfalls aktualisiert der Prozessor 102.1 in einem Schritt 110.10 die aktuelle Nutzungsinformation dV (also die aktuell verfügbare Restmenge an Tinte in der Tintenkartusche 107) mithilfe der aktuellen Verbrauchsinformation dV und speichert diese in dem zugehörigen Kartuschendatensatz KDS in dem zweiten Speicher 102.3 der Frankiermaschine 102. Dabei kann vorgesehen sein, dass der Kartuschendatensatz KDS ausgelöst durch dieses Speichern auch (unmittelbar oder zu einem späteren Zeitpunkt) an die Datenzentrale 106 übermittelt wird, um dort den entsprechenden Eintrag 106.7 in der Datenbank 106.6 zu aktualisieren. Es versteht sich hierbei, dass bei bestimmten Varianten auch vorgesehen sein kann, dass die Speicherung des Kartuschendatensatzes KDS nicht in dem zweiten Speicher 102.3 sondern ausschließlich in der Datenbank 106.6 der Datenzentrale 106 erfolgt.

Es versteht sich, dass hierbei vorgesehen sein kann, dass der Kartuschendatensatz KDS jeweils nur die aktuellste bzw. letzte Nutzungsinformation NI umfasst, die gegebenenfalls mit einem Zeitstempel TS (beispielsweise seitens des Sicherheitsmoduls 102.2) versehen sein kann. Ebenso kann aber auch vorgesehen sein, dass der Kartuschendatensatz KDS eine Historie der Nutzungsinformationen NI umfasst, welche dann in einer entsprechenden Sequenz und/oder verknüpft mit einer entsprechenden zeitlichen Information (beispielsweise einem Zeitstempel) abgelegt sind.

Wird in dem Schritt 110.7 festgestellt, dass keine Freigabe zur Nutzung der Kartusche 107 vorliegt, wird in einen Schritt 110.11 überprüft, ob ein Befüllen der Tintenkartusche 107 erforderlich ist. Ist dies der Fall, wird in einem Schritt 110.12 zunächst überprüft, ob der Verfahrensablauf enden soll. Ist dies nicht der Fall, wird zu einem Schritt 110.13 gesprungen, in dem die Tintenkartusche 107 zur Befüllung designiert wird. Der Nutzer kann die Tintenkartusche 107 dann an Befüller übersenden, welcher dann nach der Befüllung mittels der Datenzentrale 109 einen aktualisierten Kartuschendatensatz KDS an die Datenzentrale 106 übermittelt, welchen diese dann in der Datenbank 106.6 einträgt.

Wird in dem Schritt 110.12 festgestellt, dass das Verfahren beendet werden soll, endet dieses in einem Schritt 114.

Mit dem vorstehend beschriebenen System 101 lassen sich die oben beschriebenen Varianten realisieren. So ist es mit dem System 101 möglich, auf einfache und kostengünstige Weise einen hohen Schutz gegen die Nutzung unautorisierter Tintenkartuschen 107 zu realisieren, indem der Prozessor 102.1 den aktuellen Verbrauch an Tinte der eingesetzten Tintenkartusche 107 nachhält und beim Eintreten nutzungsrelevanter Ereignisse zum einen ein Speichern einer entsprechenden aktuellen Nutzungsinformation NI logisch verknüpft mit der Kartuschenidentifikation KID in dem zweiten Speicher 102.3 und/oder der Datenbank 106.6 (als weiterem zweiten Speicher) in Form des Kartuschendatensatzes KDS veranlasst und zum anderen einen irreversibel beschreibbaren Speicherbereich 111.1 des ersten Speichers 107.1 beschreibt.

Durch diese Kombination aus einer mit der Kartuschenidentifikation logisch verknüpften Dokumentation der Nutzung der Tintenkartusche 107 und dem irreversiblen Beschreiben des Speichers 107.1 der Tintenkartusche 107 ist es in vorteilhafter Weise unter anderem möglich, bereits zu Beginn eines Nutzungsintervalls ein bestimmtes Verbrauchsvolumen W (über das irreversible Beschreiben des Speicherbereichs 111.1) als verbraucht zu markieren, gleichzeitig aber durch das der Tintenkartusche 107 eindeutig zugeordnete Nachhalten des aktuellen Verbrauchs dV der Frankiermaschine 102 die tatsächliche Nutzung des als verbraucht markierten Verbrauchsvolumens W zu ermöglichen.

Die irreversible Markierung eines Verbrauchsvolumens W mittels Beschreiben eines ersten Speicherbereichs 111.1 stellt dabei in einfacher Weise sicher, dass bei einer nicht autorisierten Wiederbefüllung das nachgefüllte Volumen nicht genutzt werden kann, da es über den ersten Speicher 107.1 als verbraucht markiert ist und der Prozessor 102.1 dementsprechend nur die Nutzung eines gegebenenfalls noch vorhandenen Restvolumens zulässt.

Die mit der Kartuschenidentifikation KID logisch verknüpfte Speicherung der aktuellen Nutzungsinformation NI ermöglicht es, zum einen (zum Beispiel bei einem erneuten Einsetzen der Tintenkartusche 107 in das Druckmodul 102.6 einen gegebenenfalls noch nicht verbrauchten Teil des (gemäß dem Zustand des ersten Speichers 111.1) als verbraucht markierten Verbrauchsvolumens W dennoch zu nutzen.

Weiterhin ist es möglich, die der Tintenkartusche 107 eindeutig zugeordnete aktuelle Nutzungsinformation NI nicht nur in der Frankiermaschine selbst zu halten, sondern gegebenenfalls zusätzlich oder alternativ an die Datenzentrale 106 zu übermitteln und dort zu halten sowie von dort aus anderen Frankiermaschinen 103, 104 zur Verfügung zu stellen. Ein noch nicht verbrauchter Teil des als verbraucht markierten Verbrauchsvolumens W kann anhand dieser eindeutig zugeordneten Nutzungsinformation NI des Kartuschendatensatzes KDS dann auch in diesen anderen Frankiermaschinen 103, 104 verbraucht werden, wenn die Tintenkartusche 107 dort eingesetzt wird.

Wie oben beschrieben kann es sich bei dem als verbraucht markierten Verbrauchsvolumen W grundsätzlich um das gesamte nutzbare Tintenvolumen der Tintenkartusche 107 handeln. Im vorliegenden Beispiel ist das als verbraucht markierte Verbrauchsvolumen W nur ein Teil des nutzbaren Gesamtvolumens GV an Tinte der Tintenkartusche 107. Hierbei kann grundsätzlich eine beliebig geeignete Unterteilung des Tintengesamtvolumens GV in einzelne Verbrauchsvolumina W vorgesehen sein. Diese Unterteilung ist vorzugsweise auf die Anzahl an separat irreversibel beschreibbaren Speicherbereichen 111.1 des ersten Speichers 107.1 abgestimmt. Dabei kann grundsätzlich vorgesehen sein, dass bei einem einmaligen Verbrauch des Gesamtvolumens GV der Tintenkartusche 107 auch sämtliche erste Speicherbereiche 111.1 des ersten Speichers 107.1 irreversibel beschrieben sind. Ein erneutes Befüllen und anschließende Nutzung der Tintenkartusche 107 ist dann nicht mehr möglich.

Vorzugsweise ist wie im vorliegenden Beispiel jedoch vorgesehen, dass die Anzahl der Speicherbereiche 111.1 des ersten Speichers 107.1 größer ist als die Anzahl einzelnen Verbrauchsvolumina W, in die das Gesamtvolumen GV der Tintenkartusche 107 unterteilt ist. Hiermit ist es möglich, die Tintenkartusche 107 wieder zu befüllen und erneut in Frankiermaschinen 102, 103, 104 zu nutzen.

Es versteht sich, dass die aktuelle Nutzungsinformation NI beliebig gestaltet sein kann, um die aktuelle Nutzung der Tintenkartusche 107 zu dokumentieren. So kann es sich einfach um die aktuelle Verbrauchsinformation dV selbst handeln. Ebenso ist es natürlich möglich, dass es sich (wie oben beschrieben) bei der aktuellen Nutzungsinformation NI um eine anhand der aktuellen Verbrauchsinformation dV erstellte Information über die noch in der Tintenkartusche 107 verbleibende Restmenge bzw. ein noch verbleibendes nutzbares Restvolumen RV an Tinte in der Tintenkartusche 107 handelt.

Dabei versteht es sich, dass die Nutzungsinformation NI gegebenenfalls auch um weitere Informationen ergänzt werden kann. Beispielsweise kann wie oben beschrieben vorgesehen sein, dass die aktuelle Nutzungsinformation NI mit einem ein Zeitstempel TS oder dergleichen versehen wird, um den Zeitpunkt ihrer Erstellung und/oder Speicherung nachvollziehbar zu machen. Ebenso ist es wie oben beschrieben möglich, die Nutzungsinformation NI nicht nur der Tintenkartusche 107 sondern auch der Frankiermaschine 102, 103, 104 logisch zuzuordnen (beispielsweise über deren eine eindeutige Frankiermaschinenidentifikation FMID), sodass gegebenenfalls über den ersten Speicher 107.1 (genauer gesagt dessen Speicherbereiche 111.1) als verbraucht markierte Verbrauchsvolumina W auch nur durch die Frankiermaschine 102, 103, 104 genutzt werden können, in der die Markierung als verbraucht erfolgte.

Bei dem nutzungsrelevanten Ereignis NRE, das in Schritt 110.9 erfasst wird, kann es sich um beliebige zeitliche oder nicht-zeitliche Ereignisse handeln, welche für die Nutzung der Tintenkartusche 107 durch die Frankiermaschine 102 relevant sind. Beispielsweise kann das nutzungsrelevante Ereignis NRE ein zeitliches Ereignis sein, beispielsweise der Ablauf einer vorgebbaren Zeitspanne dT seit der letzten Nutzung der Tintenkartusche 107. Ebenso kann es sich beispielsweise um das Einsetzen der Tintenkartusche 107 in das Druckmodul 102.6 handeln. Ebenso kann es sich um eine erstmalige Nutzung der Tintenkartusche 107 nach dem Einsetzen der Tintenkartusche 107 in das Druckmodul 102.6 handeln oder den tatsächlichen Verbrauch des (gemäß dem Zustand des ersten Speicherbereichs 111.1) als verbraucht markierten Verbrauchsvolumens W. Dabei kann es sich insbesondere um das Erreichen eines vorgebbaren Verbrauchswertes seit einem unmittelbar vorhergehenden nutzungsrelevanten Ereignis NRE. Auch kann es sich bei dem nutzungsrelevanten Ereignis NRE um den Eingang eines Entnahmebefehls zum Entnehmen der Tintenkartusche 107 aus dem Druckmodul 102.6 handeln.

Bei allen diesen Ereignissen NRE ist es von Vorteil, wenn die zugehörige aktuelle Verbrauchsinformation dV gespeichert wird, beispielsweise in dem Kartuschendatensatz KDS. Zudem ist gerade das Einsetzen, das erstmalige Nutzen nach dem Einsetzen sowie das Erreichen eines bestimmten Verbrauchswertes (beispielsweise der Verbrauch eines oben genannten Verbrauchsvolumens W) nach einem solchen nutzungsrelevanten Ereignis ein geeigneter Zeitpunkt, um einen Speicherbereich 111.1 des ersten Speichers 107.1 zu beschreiben und so ein bestimmtes Verbrauchsvolumen W in der oben beschriebenen Weise in dem ersten Speicher 107.1 als verbraucht zu markieren, bevor es tatsächlich verbraucht wurde.

Ebenso kann natürlich auch vorgesehen sein, dass diese Markierung als verbraucht erst am Ende eines Nutzungsintervalls NINT, beispielsweise beim Entnehmen der Tintenkartusche 107 oder beim Erreichen des Verbrauchswertes dV = W erfolgt.

Wie der Figur 3 zu entnehmen ist, weist der erste Speicher 107.1 eine Mehrzahl von N irreversibel beschreibbaren Speicherbereichen 111.1, 111.2 auf. Der Prozessor 102.1 beschreibt die Speicherbereiche 111.1, 111.2 in bei Eintreten nutzungsrelevanter Ereignisse NRE in einer vorgebbaren Sequenz. Die Sequenz kann dabei logisch und/oder physikalisch (durch den Aufbau des ersten Speichers 107.1) vorgegeben sein. Hiermit ist es an einfacher Weise möglich, eine beliebig feine und geeignete Unterteilung des mit einer Befüllung der Tintenkartusche 107 verfügbaren Gesamtvolumens GV in einzelne Verbrauchsvolumina W vorzunehmen und deren Verbrauch einfach nachvollziehbar zu markieren.

Die Anzahl an irreversibel beschreibbaren Speicherbereichen 111.1, 111.2 des ersten Speichers kann grundsätzlich beliebig gewählt sein. Bevorzugt umfasst der erste Speicher eine Mehrzahl von N = 10 bis 100, vorzugsweise N = 15 bis 50, weiter vorzugsweise N = 20 bis 30, irreversibel beschreibbare Speicherbereiche 111.1, 111.2. Hiermit lässt sich mit vertretbarem Aufwand eine gute Unterteilung des Gesamtvolumens GV an Druckmedium der Tintenkartusche 107 vornehmen.

Wie Figur 3 zu entnehmen ist, ist der erste Speicher 107.1 im vorliegenden Beispiel physikalisch und/oder logisch in eine Mehrzahl von M Speicherbereichsgruppen 111.3 mit jeweils mehreren irreversibel beschreibbaren Speicherbereichen 111.1, 111.2 unterteilt. Dabei zeigt Figur 3A einen Neuzustand mit noch nicht irreversibel beschriebenen ersten Speicherbereichen 111.1, 111.2. Hiermit ist es in einfacher Weise möglich, die Tintenkartusche 107 wiederbefüllbar zu gestalten, indem einer Füllung (also einem nach einer vollständigen Befüllung verfügbaren Gesamtvolumen GV) jeweils eine Speicherbereichsgruppe 111.3 zugeordnet wird, deren erste Speicherbereiche 111.1 dann nach Verbrauch dieses Gesamtvolumens GV irreversibel beschrieben sind. Nach einem erneuten Befüllen kann dann eine weitere Speicherbereichsgruppe 111.3 genutzt werden, um den Verbrauch des nachgefüllten Gesamtvolumens GV zu dokumentieren, wie nachfolgend näher beschrieben wird.

Auch hier kann die Anzahl an Speicherbereichsgruppen 111.3 des ersten Speichers und/oder die Anzahl der einzelnen Speicherbereiche 111.1, 111.2 einer solchen Speicherbereichsgruppe 111.3 grundsätzlich beliebig gewählt sein. Vorzugsweise umfasst der erste Speicher 107.1 eine Mehrzahl von M = 2 bis 20, vorzugsweise M = 3 bis 10, weiter vorzugsweise M = 5 bis 8, Speicherbereichsgruppen 111.3. Jede Speicherbereichsgruppe 111.3 umfasst vorzugsweise Z = 2 bis 20, vorzugsweise Z = 3 bis 10, weiter vorzugsweise Z = 4 bis 8, Speicherbereiche 111.1, 111.2. Hiermit ist eine ausreichend feine Unterteilung des ersten Speichers 107.1 bzw. der einzelnen Speicherbereichsgruppen 111.3 möglich mit einer einfachen Begrenzung der Anzahl der möglichen autorisierten Wiederbefüllungen der Tintenkartusche 107.

Wie beschrieben kann der einzelne irreversibel beschreibbare Speicherbereich 111.1, 111.2 grundsätzlich eine beliebige geeignete Größe aufweisen. Insbesondere kann er mehrere Bit umfassen, die gegebenenfalls beim Beschreiben in einer bestimmten Sequenz bzw. in einem bestimmten vorgegebenen Muster gesetzt werden. Im vorliegenden Beispiel weist jeder irreversibel beschreibbare Speicherbereich 111.1, 111.2 des ersten Speichers 107.1 genau ein Bit auf. Hiermit lässt sich eine besonders kostengünstige und kompakte Konfiguration erzielen, die einfach in eine ohnehin vorhandene elektronische Komponente der Tintenkartusche 107 integriert werden kann.

Im vorliegenden Beispiel sind umfasst die jeweilige Speicherbereichsgruppe 111.3 mehrere (hier vier) erste Speicherbereiche 111.1 und einen zweiten Speicherbereich 111.2 . Der Prozessor 102.1 beschreibt bei Eintreten eines nutzungsrelevanten Ereignisses NRE jeweils einen neuen ersten Speicherbereich 111.1 (Figur 3B zeigt einen Zustand nach einem Beschreiben eines ersten Speicherbereichs 111.1.

Der Prozessor 102.1 blockiert die Nutzung der Tintenkartusche 107 in dem Schritt 110.7, wenn alle ersten Speicherbereiche 111.1 der aktuell zu beschreibenden Speicherbereichsgruppe 111.3 beschrieben sind, aber der zweite Speicherbereich 111.2 der Speicherbereichsgruppe 111.3 nicht beschrieben ist (siehe Figur 3C). Hiermit ist es beispielsweise in einfacher Weise möglich, über den zweiten Speicherbereich 111.2 erkennbar zu machen, dass ein verfügbares Gesamtvolumen GV der Tintenkartusche 107 verbraucht ist und noch keine autorisierte Wiederbefüllung vorliegt. Hierbei versteht es sich, dass wie oben dargelegt bei einem Beschreiben des ersten Speicherbereichs 111.1 zu Beginn des Nutzungsintervalls NINT (also zu Beginn der Nutzung des zugeordneten Verbrauchsvolumens W) über die aktuelle Nutzungsinformation NI natürlich noch einen tatsächlichen Verbrauch des Verbrauchsvolumens W zu ermöglichen, welches dem zuletzt beschriebenen ersten Speicherbereich 111.1 der Speicherbereichsgruppe 111.3 zugeordnet ist.

Weiterhin ist im vorliegenden Beispiel vorgesehen, dass erst wenn der zweite Speicherbereich 111.2 der einen Speicherbereichsgruppe 111.3 beschrieben ist, zur Verwendung einer weiteren Speicherbereichsgruppe 111.3 übergegangen werden kann, welche dann ebenfalls mit dem Verbrauch Schritt für Schritt (bzw. erster Speicherbereich 111.1 für erster Speicherbereich 111.1) beschrieben wird um den Verbrauch der nachgefüllten Tinte zu dokumentieren.

Hierbei kann grundsätzlich vorgesehen sein, dass auch der zweite Speicherbereich 111.2 durch den Prozessor 102.1 beschrieben werden kann. Hierbei kann durch entsprechende Maßnahmen sichergestellt sein, dass das Beschreiben nur bei Vorliegen einer entsprechenden Autorisierung erfolgt. Vorzugsweise ist der Prozessor 102.1 und/oder der zweite Speicherbereich 111.2 derart konfiguriert, dass der zweite Speicherbereich 111.2 nicht durch den Prozessor 102.1 beschreibbar ist. Hiermit kann in einfacher Weise sichergestellt werden, dass nur ein autorisierter Befüller der Tintenkartusche 107 diese für einen weiteren Verbrauchszyklus durch Beschreiben des zweiten Speicherbereichs 111.2 der zuletzt beschriebenen Speicherbereichsgruppe 111.3 freigeben kann.

Im vorliegenden Beispiel gibt der Prozessor 102.1 in dem Schritt 110.7 eine weitere Nutzung der Tintenkartusche 107 frei, wenn alle ersten und zweiten Speicherbereiche 111.1, 111.2 der ersten Speicherbereichsgruppe 111.3 beschrieben sind und eine nachfolgende zweite Speicherbereichsgruppe 111.3 wenigstens einen unbeschriebenen ersten Speicherbereich 111.1 aufweist (siehe Figur 3D). Hiermit ist insbesondere der oben beschriebene Übergang zur Verwendung der zweiten Speicherbereichsgruppe 111.1 nach autorisierter Wiederbefüllung der Tintenkartusche 107 möglich. Der Prozessor 102.1 beschreibt dann bei Eintreten eines nutzungsrelevanten Ereignisses NRE nach erstmaligem Erfassen eines beschriebenen zweiten Speicherbereiches 111.2 der ersten Speicherbereichsgruppe 111.3 einen ersten Speicherbereich 111.1 der nachfolgenden zweiten Speicherbereichsgruppe 111.3, mithin also zur Nutzung der zweiten Speicherbereichsgruppe 111.3 überzugehen (siehe Figur 3E). Wenn alle Speicherbereiche 111.1, 111.2 aller Speicherbereichsgruppen 111.3 beschrieben sind (siehe Figur 3F), endet die Nutzungsdauer der Tintenkartusche 107 und sie kann nicht mehr autorisiert in einer der Frankiermaschinen 102, 103, 104 genutzt werden.

Bei bestimmten vorteilhaften Varianten beschreibt der Prozessor 102.1 bei erstmaliger Nutzung der Tintenkartusche 107 nach dem Einsetzen und/oder bei Erreichen eines vorgebbaren Verbrauchswertes dV einen der Speicherbereiche 111.1. Dabei veranlasst der Prozessor 102.1 das Speichern einer (gegebenenfalls eindeutigen) Speicherbereichsidentifikation SBID des beschriebenen Speicherbereichs 111.1 logisch verknüpft mit der Kartuschenidentifikation KID in dem zweiten Speicher 102.3 und/oder der Datenbank 106.6, beispielsweise in dem Kartuschendatensatz KDS.

Hiermit wird eine Dokumentation der beschriebenen Speicherbereiche 111.1 in dem zweiten Speicher 102.3 bzw. der Datenbank 106.6 erreicht. Damit ist es beispielsweise auch möglich, dass der Prozessor 102.1, ein Speichern der Speicherbereichsidentifikation SBID des beschriebenen Speicherbereichs 111.1 logisch verknüpft mit der Frankiermaschinenidentifikation FMID der Frankiermaschine 102 in dem Kartuschendatensatz KDS bewirkt. In diesem Fall kann der Speicherbereich 111.1 bzw. das ihm zugeordnete Verbrauchsvolumen W seinerseits der Frankiermaschinen 102 zugeordnet werden. Hiermit ist es möglich, dieses dem Speicherbereich zugeordnete Verbrauchsvolumen W für die betreffende Frankiermaschine 102 zu reservieren und dessen Verbrauch nachfolgend nur in der zugeordneten Frankiermaschinen 102 freizugeben. Ein Verbrauch eines solchen reservierten Verbrauchsvolumens W kann dann in einer anderen Frankiermaschine 103, 104 blockiert werden.

Hierbei ist es dann insbesondere vorgesehen, dass dem beschriebenen Speicherbereich 111.1 eine Verbrauchsmengeninformation VMI logisch zugeordnet wird, die für eine dem beschriebenen Speicherbereich zugeordnete bisherige Verbrauchsmenge repräsentativ ist, und eine Nutzung der Tintenkartusche 107 in Abhängigkeit von der Verbrauchsmengeninformation VMI und der aktuellen Verbrauchsinformation dV bis zum Erreichen der dem beschriebenen Speicherbereich zugeordneten Verbrauchsmenge bzw. Verbrauchsvolumen W freizugeben. Hiermit kann eine vorteilhafte Zuordnung eines beschriebenen Speicherbereichs 111.1 zu einem bestimmten vorgebbaren Verbrauchsvolumen W realisiert werden.

Wie beschrieben, kann der Prozessor 102 ausgelöst durch ein Einsetzen der Tintenkartusche 107 in das Gutverarbeitungsgerät unter Verwendung der Kartuschenidentifikation KID von einer entfernten Datenzentrale eine der Tintenkartusche 107 zugeordnete gespeicherte Restmengeninformation in Form der Nutzungsinformation NI Abfragen, die für eine verbleibende Restmenge an Tinte in der Tintenkartusche 107 repräsentativ ist. In diesem Fall kann der Prozessor 102.1 dann eine Nutzung der Tintenkartusche 107 in Abhängigkeit von der erhaltenen Restmengeninformation RMI (beispielsweise in Form der. Nutzungsinformation NI) und der aktuellen Verbrauchsinformation dV bis zum Erreichen einer vorgebbaren minimalen Restmenge RMM freigeben. Mit anderen Worten ist es hiermit in vorteilhafter Weise möglich, den Verbrauch aus der Tintenkartusche 107 gegebenenfalls auch über deren Nutzung in mehreren Frankiermaschinen 102, 103, 104 nachzuverfolgen und die Nutzung der demgemäß verbleibenden Restmenge RM freizugeben.

Dabei kann insbesondere vorgesehen sein, dass der Prozessor 102.1 zu bestimmten Zeitpunkten bzw. zumindest bei Eintreten des wenigstens einen nutzungsrelevanten Ereignisses NRE eine aktualisierte Restmengeninformation RMI unter Verwendung der erhaltenen Restmengeninformation RMI und der aktuellen Verbrauchsinformation dV zu ermitteln und als die aktuelle Nutzungsinformation NI an die Datenzentrale 106 zu übermitteln. Mithin kann also in vorteilhafter Weise zu bestimmten Zeitpunkten bzw. bei Eintreten bestimmter Ereignisse NRE eine Aktualisierung der Restmengeninformation RMI bzw. der Nutzungsinformation NI in der entfernten Datenzentrale 106 erfolgen.

Bei bestimmten besonders vorteilhaften Varianten kann vorgesehen sein, dass der Prozessor 102.1 nach dem Einsetzen der Tintenkartusche 107 in dem Schritt 110.7 bis zum Erhalt der abgefragten gespeicherten Restmengeninformation RMI von der entfernten Datenzentrale eine Nutzung der Tintenkartusche 107 nur bis zum Erreichen eines Standardverbrauchs SW freigibt. Hiermit ist es in vorteilhafter Weise möglich, auch ohne unmittelbare Verbindung zur Datenzentrale 106 zunächst eine Nutzung der Tintenkartusche 107 freizugeben und so einerseits Verzögerungen bei der Nutzung zu vermeiden, andererseits aber eine nicht autorisierte übermäßige Nutzung zu verhindern. Dabei ist vorzugsweise vorgesehen, dass der Standardverbrauch SW höchstens der minimalen Restmenge RMM entspricht, vorzugsweise kleiner ist als die minimale Restmenge RMM. Hierdurch kann in einfacher und zuverlässiger Weise ein vollständiges Entleeren der Tintenkartusche 107 vermieden werden.

Es sei an dieser Stelle erwähnt, dass die vorstehend beschriebenen Speicher der Frankiermaschine 102 und der Datenzentrale 106 alle oder zum Teil sowohl als separate Speichermodule als auch lediglich als einzelne Speicherbereiche eines einzigen Speichermoduls der Frankiermaschine 102 bzw. der Datenzentrale 106 ausgebildet sein können.

Die vorliegende Erfindung wurde vorstehend anhand von Beispielen mit Frankiermaschinen beschrieben. Es versteht sich jedoch, dass sie sowohl in Verbindung mit anderen Frankieranordnungen (beispielsweise so genannten PC-Frankierern) zum Einsatz kommen kann, bei denen keine Integration der einzelnen Komponenten in einem gemeinsamen Gehäuse vorliegt. Ebenso kann die vorliegende Erfindung auch in Verbindung mit beliebigen anderen Gutverarbeitungsgeräten zum Einsatz kommen, bei denen ein beliebiges Verbrauchsgut in einer entsprechenden Druckeinrichtung verbraucht wird.

## Patentansprüche

1. System (101) zum Drucken eines Abdrucks auf ein flaches Gut mit
- einer ein nutzbares Gesamtvolumen eines Verbrauchsguts, insbesondere Tinte, haltenden Kartuscheneinheit (107) und
- mindestens einem Gutverarbeitungsgerät (102, 103, 104), insbesondere einer Frankiermaschine, das eine zur Nutzung der Kartuscheneinheit (107) ausgebildete Druckeinrichtung (102.6) und eine mit der Druckeinrichtung (102.6) verbundene erste Datenverarbeitungseinheit (102.1) zur Steuerung der Nutzung der Kartuscheneinheit (107) zum Erstellen des Abdrucks umfasst,
wobei
- das Gutverarbeitungsgerät (102, 103, 104) dazu konfiguriert ist, ein Einsetzen der Kartuscheneinheit (107) in die Druckeinrichtung (102.6) zu erfassen,
- das Gutverarbeitungsgerät (102, 103, 104) dazu konfiguriert ist, eine aktuelle Verbrauchsinformation zu erzeugen, welche für die Nutzung der Kartuscheneinheit (107) durch die Druckeinrichtung (102.6) seit dem Einsetzen repräsentativ ist,
- die Kartuscheneinheit (107) einen ersten Speicher (107.1) aufweist, in dem nichtflüchtig, insbesondere unveränderbar, eine eindeutige Kartuschenidentifikation der Kartuscheneinheit gespeichert ist,
- das nutzbare Gesamtvolumen ein oder mehrere Verbrauchsvolumina der Kartuscheneinheit (107) definiert,
wobei
- die erste Datenverarbeitungseinheit (102.1) dazu konfiguriert ist, zumindest bei Eintreten wenigstens eines vorgebbaren nutzungsrelevanten Ereignisses ein Speichern einer mittels der aktuellen Verbrauchsinformation generierten aktuellen Nutzungsinformation logisch verknüpft mit der Kartuschenidentifikation in wenigstens einem zweiten Speicher (102.3, 106.6) zu veranlassen, wobei das nutzungsrelevante Ereignis für die Nutzung der Kartuscheneinheit (107) durch die Druckeinrichtung (102.6) relevant ist, und
- die erste Datenverarbeitungseinheit (102.1) dazu konfiguriert ist, bei Eintreten des nutzungsrelevanten Ereignisses einen irreversibel beschreibbaren Speicherbereich (111.1, 111.2) des ersten Speichers (107.1) zu beschreiben, um ein dem Speicherbereich (111.1, 111.2) zugeordnetes Verbrauchsvolumen als verbraucht zu kennzeichnen,
wobei
- das dem Speicherbereich (111.1, 111.2) zugeordnete Verbrauchsvolumen bei Eintreten des nutzungsrelevanten Ereignisses noch nutzbar ist und unter Verwendung der aktuellen Nutzungsinformation durch die Datenverarbeitungseinheit (102.1) zur Nutzung freigebbar ist.

2. System nach Anspruch 1, wobei
- das wenigstens eine nutzungsrelevante Ereignis eine erstmalige Nutzung der Kartuscheneinheit (107) nach dem Einsetzen ist
und/oder
- das wenigstens eine nutzungsrelevante Ereignis ein Erreichen eines vorgebbaren Verbrauchswertes seit dem Einsetzen ist
und/oder
- das wenigstens eine nutzungsrelevante Ereignis ein Erreichen eines vorgebbaren Verbrauchswertes seit einem unmittelbar vorhergehenden nutzungsrelevanten Ereignis ist
und/oder
- das wenigstens eine nutzungsrelevante Ereignis der Eingang eines Entnahmebefehls zum Entnehmen der Kartuscheneinheit (107) aus der Druckeinrichtung (102.6) ist.

3. System nach Anspruch 1 oder 2, wobei
- der erste Speicher (107.1) eine Mehrzahl von N irreversibel beschreibbaren Speicherbereichen (111.1, 111.2) aufweist und
- die Datenverarbeitungseinheit (102.1) dazu konfiguriert ist, die Speicherbereiche (111.1, 111.2) bei Eintreten nutzungsrelevanter Ereignisse in einer, insbesondere vorgebbaren, Sequenz zu beschreiben,
wobei insbesondere
- der erste Speicher (107.1) eine Mehrzahl von N = 10 bis 100, vorzugsweise N = 15 bis 50, weiter vorzugsweise N = 20 bis 30, irreversibel beschreibbaren Speicherbereichen (111.1, 111.2) aufweist
und/oder
- der erste Speicher (107.1) physikalisch und/oder logisch in eine Mehrzahl von M Speicherbereichsgruppen (111.3) mit jeweils mehreren irreversibel beschreibbaren Speicherbereichen (111.1, 111.2) unterteilt ist, wobei der erste Speicher (107.1) insbesondere eine Mehrzahl von M = 2 bis 20, vorzugsweise M = 3 bis 10, weiter vorzugsweise M = 5 bis 8, Speicherbereichsgruppen (111.3) aufweist,
und/oder
- wenigstens ein irreversibel beschreibbarer Speicherbereich (111.1, 111.2), insbesondere jeder irreversibel beschreibbare Speicherbereich (111.1, 111.2), wenigstens ein Bit, insbesondere genau ein Bit, aufweist.

4. System nach Anspruch 3, wobei
- wenigstens ein Teil der Speicherbereiche (111.1, 111.2) physikalisch und/oder logisch zu einer Speicherbereichsgruppe (111.3) zusammengefasst ist, die wenigstens einen ersten Speicherbereich (111.1) und wenigstens einen zweiten Speicherbereich (111.2) aufweist, wobei die erste Datenverarbeitungseinheit (102.1) dazu konfiguriert ist, bei Eintreten eines nutzungsrelevanten Ereignisses einen ersten Speicherbereich (111.1) zu beschreiben und eine Nutzung der Kartuscheneinheit (107) durch die Druckeinrichtung (102.6) zu blockieren, wenn alle ersten Speicherbereiche (111.1) der Speicherbereichsgruppe (111.3) beschrieben sind und der wenigstens eine zweite Speicherbereich (111.2) der Speicherbereichsgruppe (111.3) nicht beschrieben ist, wobei die erste Datenverarbeitungseinheit (102.1) und/oder der wenigstens eine zweite Speicherbereich (111.2) insbesondere derart konfiguriert ist, dass der wenigstens eine zweite Speicherbereich (111.2) nicht durch die erste Datenverarbeitungseinheit (102.1) beschreibbar ist,
und/oder
- wenigstens ein erster Teil der Speicherbereiche (111.1, 111.2) physikalisch und/oder logisch zu einer ersten Speicherbereichsgruppe (111.3) zusammengefasst ist und wenigstens ein zweiter Teil der Speicherbereiche (111.1, 111.2) physikalisch und/oder logisch zu einer zweiten Speicherbereichsgruppe (111.3) zusammengefasst ist, wobei die jeweilige Speicherbereichsgruppe (111.3) wenigstens einen ersten Speicherbereich (111.1) und wenigstens einen zweiten Speicherbereich (111.2) aufweist, wobei die erste Datenverarbeitungseinheit (102.1) dazu konfiguriert ist, eine weitere Nutzung der Kartuscheneinheit (107) durch die Druckeinrichtung (102.6) freizugeben, wenn alle ersten und zweiten Speicherbereiche (111.1, 111.2) der ersten Speicherbereichsgruppe (111.3) beschrieben sind und die zweite Speicherbereichsgruppe (111.3) wenigstens einen unbeschriebenen ersten Speicherbereich (111.1) aufweist, wobei die erste Datenverarbeitungseinheit (102.1) insbesondere dazu konfiguriert ist, bei Eintreten eines nutzungsrelevanten Ereignisses nach erstmaligem Erfassen eines beschriebenen zweiten Speicherbereiches (111.2) der ersten Speicherbereichsgruppe (111.3) einen ersten Speicherbereich (111.1) der zweiten Speicherbereichsgruppe (111.3) zu beschreiben.
und/oder
- wenigstens ein Teil der Speicherbereiche (111.1, 111.2) physikalisch und/oder logisch zu wenigstens einer Speicherbereichsgruppe (111.3) zusammengefasst ist, die wenigstens einen ersten Speicherbereich (111.1) und wenigstens einen zweiten Speicherbereich (111.2) aufweist, wobei die Speicherbereiche (111.1, 111.2) dazu konfiguriert sind, dass ein erster Speicherbereich (111.1) durch die erste Datenverarbeitungseinheit (102.1) beschreibbar ist und ein zweiter Speicherbereich (111.2) nicht durch die erste Datenverarbeitungseinheit (102.1) sondern nur durch einen autorisierten Nachfüller der Kartuscheneinheit (107) beschreibbar ist.

5. System nach Anspruch 3 oder 4, wobei
- die erste Datenverarbeitungseinheit (102.1) dazu konfiguriert ist, bei erstmaliger Nutzung der Kartuscheneinheit (107) nach dem Einsetzen und/oder bei Erreichen eines vorgebbaren Verbrauchswertes einen der Speicherbereiche (111.1, 111.2) zu beschreiben und
- die erste Datenverarbeitungseinheit (102.1) dazu konfiguriert ist, ein Speichern einer Speicherbereichsidentifikation des beschriebenen Speicherbereichs (111.1, 111.2) logisch verknüpft mit der Kartuschenidentifikation in dem wenigstens einen zweiten Speicher (102.3, 106.6) zu veranlassen,
wobei insbesondere
- die erste Datenverarbeitungseinheit (102.1) dazu konfiguriert ist, ein Speichern der Speicherbereichsidentifikation des beschriebenen Speicherbereichs (111.1, 111.2) logisch verknüpft mit einer eindeutigen Gutverarbeitungsgeräteidentifikation des Gutverarbeitungsgeräts(102, 103, 104) zu veranlassen,
und/oder
- die erste Datenverarbeitungseinheit (102.1) dazu konfiguriert ist, dem beschriebenen Speicherbereich (111.1, 111.2) eine Verbrauchsmengeninformation logisch zuzuordnen, die für eine dem beschriebenen Speicherbereich (111.1, 111.2) zugeordnete Verbrauchsmenge an Verbrauchsgut der Kartuscheneinheit (107) repräsentativ ist, und eine Nutzung der Kartuscheneinheit (107) in Abhängigkeit von der Verbrauchsmengeninformation und der aktuellen Verbrauchsinformation bis zum Erreichen der dem beschriebenen Speicherbereich (111.1, 111.2) zugeordneten Verbrauchsmenge freizugeben.

6. System nach einem der Ansprüche 1 bis 5, wobei
- der wenigstens eine zweite Speicher ein Speicher (102.3) des Gutverarbeitungsgeräts (102, 103, 104) ist
und/oder
- der wenigstens eine zweite Speicher ein Speicher (106.6) einer von dem Gutverarbeitungsgerät entfernten Datenzentrale (106) ist, die mit der Datenverarbeitungseinheit (102.1) über ein Kommunikationsnetz (105) verbindbar ist, wobei die Datenverarbeitungseinheit (102.1) insbesondere dazu konfiguriert ist, die aktuelle Nutzungsinformation verknüpft mit der Kartuschenidentifikation und einer eindeutigen Gutverarbeitungsgeräteidentifikation des Gutverarbeitungsgeräts (102, 103, 104) an die entfernte Datenzentrale (106) zu übermitteln.
und/oder
- die aktuelle Nutzungsinformation der aktuellen Verbrauchsinformation entspricht oder die aktuelle Nutzungsinformation eine Restmengeninformation ist, die für die verbleibende Restmenge an Verbrauchsgut der Kartuscheneinheit (107) repräsentativ ist und unter Verwendung der aktuellen Verbrauchsinformation ermittelt wurde,
und/oder
- der wenigstens eine zweite Speicher (102.3, 106.6) dazu konfiguriert ist, mehrere Kartuschendatensätze zu speichern, wobei jeder Kartuschendatensatz wenigstens eine Nutzungsinformation und eine Kartuschenidentifikation für eine Kartuscheneinheit (107) umfasst, wobei der Kartuschendatensatz insbesondere wenigstens eine der Nutzungsinformation zugeordnete eindeutige Gutverarbeitungsgeräteidentifikation des Gutverarbeitungsgeräts (102, 103, 104) umfasst, aus der aktuelle Nutzungsinformation stammt.

7. System nach einem der Ansprüche 1 bis 6, wobei
- die Datenverarbeitungseinheit (102.1) dazu konfiguriert ist, ausgelöst durch ein Einsetzen der Kartuscheneinheit (107) in das Gutverarbeitungsgerät unter Verwendung der Kartuschenidentifikation von einer entfernten Datenzentrale (106) eine der Kartuscheneinheit (107) zugeordnete gespeicherte Restmengeninformation abzufragen, die für eine verbleibende Restmenge an Verbrauchsgut der Kartuscheneinheit (107) repräsentativ ist, und
- die Datenverarbeitungseinheit (102.1) dazu konfiguriert ist, eine Nutzung der Kartuscheneinheit (107) in Abhängigkeit von der erhaltenen Restmengeninformation und der aktuellen Verbrauchsinformation bis zum Erreichen einer vorgebbaren minimalen Restmenge freizugeben,
wobei insbesondere
- die Datenverarbeitungseinheit (102.1) dazu konfiguriert ist, zumindest bei Eintreten des wenigstens einen nutzungsrelevanten Ereignisses eine aktualisierte Restmengeninformation unter Verwendung der erhaltenen Restmengeninformation und der aktuellen Verbrauchsinformation zu ermitteln und als die aktuelle Nutzungsinformation an die entfernte Datenzentrale (106) zu übermitteln,
und/oder
- die erste Datenverarbeitungseinheit (102.1) dazu konfiguriert ist, nach dem Einsetzen der Kartuscheneinheit (107) in das Gutverarbeitungsgerät bis zum Erhalt der abgefragten gespeicherten Restmengeninformation von der entfernten Datenzentrale (106) eine Nutzung der Kartuscheneinheit (107) nur bis zum Erreichen eines Standardverbrauchs freizugeben, wobei der Standardverbrauch insbesondere höchstens der minimalen Restmenge entspricht, vorzugsweise kleiner ist als die minimale Restmenge.

8. System nach einem der Ansprüche 1 bis 7, wobei
- eine von dem Gutverarbeitungsgerät entfernte Datenzentrale (106) vorgesehen ist, die über ein Kommunikationsnetz mit der ersten Datenverarbeitungseinheit (102.1) verbindbar ist und den wenigstens einen zweiten Speicher (106.6) umfasst,
wobei insbesondere
- die Datenzentrale (106) und die erste Datenverarbeitungseinheit (102.1) dazu konfiguriert sind, zur Freigabe der Nutzung der Kartuscheneinheit (107) durch das Gutverarbeitungsgerät unter Verwendung der Kartuschenidentifikation auf die der Kartuscheneinheit (107) logisch zugeordnete Nutzungsinformation aus dem wenigstens einen zweiten Speicher (106.6) zuzugreifen.

9. Datenverarbeitungseinrichtung, **dadurch gekennzeichnet, dass**
- sie als die erste Datenverarbeitungseinheit (102.1) des Systems nach einem der Ansprüche 1 bis 8 ausgebildet ist.

10. Verfahren zum Steuern eines Systems zum Drucken eines Abdrucks auf ein flaches Gut, wobei das System eine ein nutzbares Gesamtvolumen eines Verbrauchsguts haltende Kartuscheneinheit (107) und ein Gutverarbeitungsgerät (102, 103, 104), insbesondere eine Frankiermaschine, umfasst, das eine zur Nutzung der Kartuscheneinheit (107) ausgebildete Druckeinrichtung (102.6) und eine mit der Druckeinrichtung (102.6) verbundene erste Datenverarbeitungseinheit (102.1) zur Steuerung der Nutzung der Kartuscheneinheit (107) zum Drucken des Abdrucks umfasst, wobei
- das Gutverarbeitungsgerät (102, 103, 104) ein Einsetzen der Kartuscheneinheit (107) in die Druckeinrichtung (102.6) erfasst,
- das Gutverarbeitungsgerät (102, 103, 104) eine aktuelle Verbrauchsinformation erzeugt, welche für die Nutzung der Kartuscheneinheit (107) durch die Druckeinrichtung (102.6) seit dem Einsetzen repräsentativ ist,
- in einem ersten Speicher (107.1) der Kartuscheneinheit (107) nichtflüchtig, insbesondere unveränderbar, eine eindeutige Kartuschenidentifikation der Kartuscheneinheit gespeichert ist,
- das nutzbare Gesamtvolumen ein oder mehrere Verbrauchsvolumina der Kartuscheneinheit (107) definiert,
wobei
- die erste Datenverarbeitungseinheit (102.1) zumindest bei Eintreten wenigstens eines vorgebbaren nutzungsrelevanten Ereignisses ein Speichern einer mittels der aktuellen Verbrauchsinformation generierten aktuellen Nutzungsinformation logisch verknüpft mit der Kartuschenidentifikation in wenigstens einem zweiten Speicher (102.3, 106.6) veranlasst, wobei das nutzungsrelevante Ereignis für die Nutzung der Kartuscheneinheit (107) durch die Druckeinrichtung (102.6) relevant ist, und
- die erste Datenverarbeitungseinheit (102.1) bei Eintreten des nutzungsrelevanten Ereignisses einen irreversibel beschreibbaren Speicherbereich (111.1, 111.2) des ersten Speichers (107.1) beschreibt, um ein dem Speicherbereich (111.1, 111.2) zugeordnetes Verbrauchsvolumen als verbraucht zu kennzeichnen,
wobei
- das dem Speicherbereich (111.1, 111.2) zugeordnete Verbrauchsvolumen bei Eintreten des nutzungsrelevanten Ereignisses noch nutzbar ist und unter Verwendung der aktuellen Nutzungsinformation durch die Datenverarbeitungseinheit (102.1) zur Nutzung freigegeben wird.

11. Verfahren nach Anspruch 10, wobei
- das wenigstens eine nutzungsrelevante Ereignis eine erstmalige Nutzung der Kartuscheneinheit (107) nach dem Einsetzen ist
und/oder
- das wenigstens eine nutzungsrelevante Ereignis ein Erreichen eines vorgebbaren Verbrauchswertes seit dem Einsetzen ist
und/oder
- das wenigstens eine nutzungsrelevante Ereignis ein Erreichen eines vorgebbaren Verbrauchswertes seit einem unmittelbar vorhergehenden nutzungsrelevanten Ereignis ist
und/oder
- das wenigstens eine nutzungsrelevante Ereignis der Eingang eines Entnahmebefehls zum Entnehmen der Kartuscheneinheit (107) aus der Druckeinrichtung (102.6) ist.

12. Verfahren nach Anspruch 10 oder 11, wobei
- der erste Speicher (107.1) eine Mehrzahl von N irreversibel beschreibbaren Speicherbereichen (111.1, 111.2) aufweist und
- die erste Datenverarbeitungseinheit (102.1) die Speicherbereiche (111.1, 111.2) bei Eintreten nutzungsrelevanter Ereignisse in einer, insbesondere vorgebbaren, Sequenz beschreibt,
wobei insbesondere
- wenigstens ein Teil der Speicherbereiche (111.1, 111.2) physikalisch und/oder logisch zu einer Speicherbereichsgruppe (111.3) zusammengefasst ist, die wenigstens einen ersten Speicherbereich (111.1) und wenigstens einen zweiten Speicherbereich (111.2) aufweist, und die erste Datenverarbeitungseinheit (102.1) bei Eintreten eines nutzungsrelevanten Ereignisses einen ersten Speicherbereich (111.1) beschreibt und eine Nutzung der Kartuscheneinheit (107) durch die Druckeinrichtung (102.6) blockiert, wenn alle ersten Speicherbereiche (111.1) der Speicherbereichsgruppe (111.3) beschrieben sind und der wenigstens eine zweite Speicherbereich (111.2) der Speicherbereichsgruppe (111.3) nicht beschrieben ist, wobei der wenigstens eine zweite Speicherbereich (111.2) insbesondere nicht durch die erste Datenverarbeitungseinheit (102.1) beschreibbar ist,
und/oder
- wenigstens ein erster Teil der Speicherbereiche (111.1, 111.2) physikalisch und/oder logisch zu einer ersten Speicherbereichsgruppe (111.3) zusammengefasst ist und wenigstens ein zweiter Teil der Speicherbereiche (111.1, 111.2) physikalisch und/oder logisch zu einer zweiten Speicherbereichsgruppe (111.3) zusammengefasst ist, wobei die jeweilige Speicherbereichsgruppe (111.3) wenigstens einen ersten Speicherbereich (111.1) und wenigstens einen zweiten Speicherbereich (111.2) aufweist, und die erste Datenverarbeitungseinheit (102.1) eine weitere Nutzung der Kartuscheneinheit (107) durch die Druckeinrichtung (102.6) freigibt, wenn alle ersten und zweiten Speicherbereiche (111.1, 111.2) der ersten Speicherbereichsgruppe (111.3) beschrieben sind und die zweite Speicherbereichsgruppe (111.3) wenigstens einen unbeschriebenen ersten Speicherbereich (111.1) aufweist, wobei die erste Datenverarbeitungseinheit (102.1) insbesondere bei Eintreten eines nutzungsrelevanten Ereignisses nach erstmaligem Erfassen eines beschriebenen zweiten Speicherbereiches (111.2) der ersten Speicherbereichsgruppe (111.3) einen ersten Speicherbereich (111.1) der zweiten Speicherbereichsgruppe (111.3) beschreibt,
und/oder
- wenigstens ein Teil der Speicherbereiche (111.1, 111.2) physikalisch und/oder logisch zu wenigstens einer Speicherbereichsgruppe (111.3) zusammengefasst ist, die wenigstens einen ersten Speicherbereich (111.1) und wenigstens einen zweiten Speicherbereich (111.2) aufweist, wobei ein erster Speicherbereich (111.1) durch die erste Datenverarbeitungseinheit (102.1) beschreibbar ist und ein zweiter Speicherbereich (111.2) nicht durch die erste Datenverarbeitungseinheit (102.1) sondern nur durch einen autorisierten Nachfüller der Kartuscheneinheit (107) beschreibbar ist.

13. Verfahren nach Anspruch 12, wobei
- die erste Datenverarbeitungseinheit (102.1) bei erstmaliger Nutzung der Kartuscheneinheit (107) nach dem Einsetzen und/oder bei Erreichen eines vorgebbaren Verbrauchswertes einen der Speicherbereiche (111.1, 111.2) beschreibt und
- die erste Datenverarbeitungseinheit (102.1) ein Speichern einer Speicherbereichsidentifikation des beschriebenen Speicherbereichs (111.1, 111.2) logisch verknüpft mit der Kartuschenidentifikation in dem wenigstens einen zweiten Speicher (102.3, 106.6) veranlasst,
wobei insbesondere
- die erste Datenverarbeitungseinheit (102.1) ein Speichern der Speicherbereichsidentifikation des beschriebenen Speicherbereichs (111.1, 111.2) logisch verknüpft mit einer eindeutigen Gutverarbeitungsgeräteidentifikation des Gutverarbeitungsgeräts (102, 103, 104) veranlasst
und/oder
- die erste Datenverarbeitungseinheit (102.1) dem beschriebenen Speicherbereich (111.1, 111.2) eine Verbrauchsmengeninformation logisch zuordnet, die für eine dem beschriebenen Speicherbereich zugeordnete Verbrauchsmenge an Verbrauchsgut der Kartuscheneinheit (107) repräsentativ ist, und eine Nutzung der Kartuscheneinheit (107) in Abhängigkeit von der Verbrauchsmengeninformation und der aktuellen Verbrauchsinformation bis zum Erreichen der dem beschriebenen Speicherbereich (111.1, 111.2) zugeordneten Verbrauchsmenge freigibt.

14. Verfahren nach einem der Ansprüche 10 bis 13, wobei
- der wenigstens eine zweite Speicher ein Speicher (102.3) des Gutverarbeitungsgeräts (102, 103, 104) ist
und/oder
- der wenigstens eine zweite Speicher ein Speicher (106.6) einer von dem Gutverarbeitungsgerät entfernten Datenzentrale (106) ist, die mit der ersten Datenverarbeitungseinheit (102.1) über ein Kommunikationsnetz (105) verbindbar ist, wobei die erste Datenverarbeitungseinheit (102.1) insbesondere die aktuelle Nutzungsinformation verknüpft mit der Kartuschenidentifikation und einer eindeutigen Gutverarbeitungsgeräteidentifikation des Gutverarbeitungsgeräts (102, 103, 104) an die entfernte Datenzentrale (106) übermittelt,
und/oder
- die aktuelle Nutzungsinformation der aktuellen Verbrauchsinformation entspricht oder die aktuelle Nutzungsinformation eine Restmengeninformation ist, die für die verbleibende Restmenge an Verbrauchsgut der Kartuscheneinheit (107) repräsentativ ist und unter Verwendung der aktuellen Verbrauchsinformation ermittelt wurde,
und/oder
- der wenigstens eine zweite Speicher (102.3, 106.6) mehrere Kartuschendatensätze speichert, wobei jeder Kartuschendatensatz wenigstens eine Nutzungsinformation und eine Kartuschenidentifikation für eine Kartuscheneinheit (107) umfasst, wobei der Kartuschendatensatz insbesondere wenigstens eine der Nutzungsinformation zugeordnete eindeutige Gutverarbeitungsgeräteidentifikation des Gutverarbeitungsgeräts (102, 103, 104) umfasst, aus der aktuelle Nutzungsinformation stammt.

15. Verfahren nach einem der Ansprüche 10 bis 14, wobei
- Die erste Datenverarbeitungseinheit (102.1) ausgelöst durch ein Einsetzen der Kartuscheneinheit (107) in das Gutverarbeitungsgerät unter Verwendung der Kartuschenidentifikation von einer entfernten Datenzentrale (106) eine der Kartuscheneinheit (107) zugeordnete gespeicherte Restmengeninformation abfragt, die für eine verbleibende Restmenge an Verbrauchsgut der Kartuscheneinheit (107) repräsentativ ist, und
- die erste Datenverarbeitungseinheit (102.1) eine Nutzung der Kartuscheneinheit (107) in Abhängigkeit von der erhaltenen Restmengeninformation und der aktuellen Verbrauchsinformation bis zum Erreichen einer vorgebbaren minimalen Restmenge freigibt,
wobei insbesondere
- die erste Datenverarbeitungseinheit (102.1) zumindest bei Eintreten des wenigstens einen nutzungsrelevanten Ereignisses eine aktualisierte Restmengeninformation unter Verwendung der erhaltenen Restmengeninformation und der aktuellen Verbrauchsinformation ermittelt und als die aktuelle Nutzungsinformation an die entfernte Datenzentrale (106) übermittelt, und/oder
- die erste Datenverarbeitungseinheit (102.1) nach dem Einsetzen der Kartuscheneinheit (107) in das Gutverarbeitungsgerät bis zum Erhalt der abgefragten gespeicherten Restmengeninformation von der entfernten Datenzentrale (106) eine Nutzung der Kartuscheneinheit (107) nur bis zum Erreichen eines Standardverbrauchs freigibt, wobei der Standardverbrauch insbesondere höchstens der minimalen Restmenge entspricht, vorzugsweise kleiner ist als die minimale Restmenge.

16. Verfahren nach einem der Ansprüche 10 bis 15, wobei
- eine von dem Gutverarbeitungsgerät entfernte Datenzentrale (106) über ein Kommunikationsnetz mit der ersten Datenverarbeitungseinheit (102.1) verbunden wird und den wenigstens einen zweiten Speicher (106.6) umfasst,
wobei insbesondere
- die Datenzentrale und die erste Datenverarbeitungseinheit (102.1) zur Freigabe der Nutzung der Kartuscheneinheit (107) durch das Gutverarbeitungsgerät unter Verwendung der Kartuschenidentifikation auf die der Kartuscheneinheit (107) logisch zugeordnete Nutzungsinformation aus dem wenigstens einen zweiten Speicher (106.6) zugreifen.

## Claims

1. A system (101) for printing an imprint on a flat materal comprising
- a cartridge unit (107) holding a usable total volume of a consumable, in particular ink, and
- at least one material processing device (102, 103, 104), in particular a franking machine, which comprises a printing device (102.6) designed to use the cartridge unit (107) and a first data processing unit (102.1) connected to the printing device (102.6) for controlling the use of the cartridge unit (107) to produce the imprint,
wherein
- the material processing device (102, 103, 104) is configured to detect insertion of the cartridge unit (107) into the printing means (102.6),
- the material processing device (102, 103, 104) is configured to generate current consumption information representative of the use of the cartridge unit (107) by the printing device (102.6) since insertion,
- the cartridge unit (107) has a first memory (107.1) in which a unique cartridge identification of the cartridge unit is stored non-volatilely, in particular unchangeably,
- the usable total volume defines one or more of consumable volumes of the cartridge unit (107),
wherein
- the first data processing unit (102.1) is configured to cause, at least when at least one predeterminable usage-relevant event occurs, a storage of a current use-information generated by means of the current consumption information logically linked to the cartridge identification in at least one second memory (102.3, 106.6), the usage-relevant event being relevant for the use of the cartridge unit (107) by the printing device (102.6), and
- the first data processing unit (102.1) is configured to write to an irreversibly writable memory area (111.1, 111.2) of the first memory (107.1) when the usage-relevant event occurs in order to mark a consumable volume associated to the memory area (111.1, 111.2) as consumed,
wherein
- consumable volume associated to the memory area (111.1, 111.2) is still usable when the at least one predeterminable usage-relevant event occurs and can be freed for usage by the first data processing unit (102.1) using the current use-information.

2. The system according to Claim 1, wherein
- the at least one usage-relevant event is a first use of the cartridge unit (107) after insertion
and/or
- the at least one usage-relevant event is the reaching of a predeterminable consumption value since the insertion
and/or
- the at least one usage-relevant event is the reaching of a predeterminable consumption value since an immediately preceding usage-relevant event
and/or
- the at least one usage-relevant event is the receipt of a removal command for removing the cartridge unit (107) from the printing device (102.6).

3. The system according to claim 1 or 2, wherein
- the first memory (107.1) comprises a plurality of N irreversibly writable memory areas (111.1, 111.2) and
- the data processing unit (102.1) is configured to write to the memory areas (111.1, 111.2) in a sequence, in particular a sequence which can be predetermined, when usage-relevant events occur,
wherein, in particular,
- the first memory (107.1) has a plurality of N = 10 to 100, preferably N = 15 to 50, more preferably N = 20 to 30, irreversibly writeable memory areas (111.1, 111.2)
and/or
- the first memory (107.1) is divided physically and/or logically into a plurality of M memory area groups (111.3) each having a plurality of irreversibly writable memory areas (111.1, 111.2), the first memory (107.1), in particular, having a plurality of M = 2 to 20, preferably M = 3 to 10, more preferably M = 5 to 8, memory area groups (111.3),
and/or
- at least one irreversibly writable memory area (111.1, 111.2), in particular, each irreversibly writable memory region (111.1, 111.2), has at least one bit, in particular exactly one bit.

4. The system according to claim 3, wherein
- at least some of the memory areas (111.1, 111.2) are physically and/or logically combined to form a memory area group (111.3) which has at least one first memory area (111.1) and at least one second memory area (111.2), the first data processing unit (102.1) being configured to write to a first memory area (111.1) when a usage-relevant event occurs and to block the cartridge unit (107) from being used by the printing device (102.6) if all the first memory areas (111.1) of the memory area group (111.3) are written to and the at least one second memory area (111.2) of the memory area group (111.3) is not written, the first data processing unit (102.1) and/or the at least one second memory area (111.2), in particular, being configured such that the at least one second memory area (111.2) cannot be written by the first data processing unit (102.1),
and/or
- at least a first part of the memory areas (111.1, 111.2) is physically and/or logically combined to form a first memory area group (111.3) and at least a second part of the memory areas (111.1, 111.2) is physically and/or logically combined to form a second memory area group (111.3), the respective memory area group (111.3) comprising at least a first memory area (111.1) and at least a second memory area (111.2), the first data processing unit (102.1) being configured to allow further use of the cartridge unit (107) by the printing device (102.6) when all first and second memory areas (111.1, 111.2) of the first memory area group (111.3) are written to and the second memory area group (111.3) comprises at least one unwritten first memory area (111.1), wherein the first data processing unit (102.1) in particular is configured to write to a first memory area (111.1) of the second memory area group (111.3) when a usage-relevant event occurs after the first detection of an written-to second memory area (111.2) of the first memory area group (111.3).
and/or
- at least a portion of the memory areas (111.1, 111.2) is physically and/or logically combined to form at least one memory area group (111.3) which has at least one first memory area (111.1) and at least one second memory area (111.2), the memory areas (111.1, 111.2) are configured such that a first memory area (111.1) is writable by the first data processing unit (102.1) and a second memory area (111.2) is unwritable by the first data processing unit (102.1) but only by an authorized repfiller of the cartridge unit (107).

5. The system according to claim 3 or 4, wherein
- the first data processing unit (102.1) is configured to write to one of the memory areas (111.1, 111.2) when the cartridge unit (107) is used for the first time after insertion and/or when a predeterminable consumption value is reached, and
- the first data processing unit (102.1) is configured to cause storage of a memory area identification of the written-to memory area (111.1, 111.2) logically associated with the cartridge identification in the at least one second memory (102.3, 106.6),
wherein, in particular,
- the first data processing unit (102.1) is configured to cause storage of the memory area identification of the written-to memory area (111.1, 111.2) logically associated with a unique material processing device identification of the material processing device (102, 103, 104),
and/or
- the first data processing unit (102.1) is configured to logically assign consumption quantity information to the written-to memory area (111.1, 111.2) which is representative of a consumption quantity of consumable of the cartridge unit (107) assigned to the written-to memory area (111.1, 111.2), and to enable use of the cartridge unit (107) in dependence on the consumption quantity information and the current consumption information until the consumption quantity assigned to the written-to memory area (111.1, 111.2) is reached.

6. The system according to any of Claims 1 to 5, wherein
- the at least one second memory is a memory (102.3) of said material processing device (102, 103, 104)
and/or
- the at least one second memory is a memory (106.6) of a data center (106) remote from the material processing device, which data center can be connected to the data processing unit (102.1) via a communication network (105), wherein the data processing unit (102.1) is, in particular, configured to transmit the current usage information linked to the cartridge identification and to a unique material processing device identification of the material processing device (102, 103, 104) to the remote data center (106).
and/or
- the current usage information corresponds to the current consumption information or the current usage information is residual quantity information that is representative of the remaining residual quantity of consumable of the cartridge unit (107) and is determined using the current consumption information,
and/or
- the at least one second memory (102.3, 106.6) is configured to store a plurality of cartridge data sets, each cartridge data set comprising at least one usage information and one cartridge identification for a cartridge unit (107), the cartridge data set comprising in particular at least one unique material processing device identification of the material processing device (102, 103, 104) assigned to the usage information and from which current usage information originates.

7. The system according to any of Claims 1 to 6, wherein
- the data processing unit (102.1) is configured to interrogate, triggered by insertion of the cartridge unit (107) into the material processing apparatus and using the cartridge identification, from a remote data center (106), stored residual quantity information associated with the cartridge unit (107) which is representative of a remaining residual quantity of consumable of the cartridge unit (107), and
- the data processing unit (102.1) is configured to release use of the cartridge unit (107) in dependence on the residual quantity information obtained and the current consumption information until a predeterminable minimum residual quantity is reached,
wherein, in particular,
- the data processing unit (102.1) is configured, at least when the at least one usage-relevant event occurs, to determine an updated residual quantity information using the received residual quantity information and the current consumption information and to transmit it as the current usage information to the remote data center (106),
and/or
- the first data processing unit (102.1) is configured to release a use of the cartridge unit (107) only until a standard consumption is reached after the cartridge unit (107) has been inserted into the material processing apparatus unless the stored residual quantity information interrogated is received from the remote data center (106), the standard consumption in particular corresponding at most to the minimum residual quantity, preferably being smaller than the minimum residual quantity.

8. The system according to any of Claims 1 to 7, wherein
- a data center (106) remote from the material processing device is provided, which can be connected to the first data processing unit (102.1) via a communication network and which comprises the at least one second memory (106.6),
wherein, in particular,
- the data center (106) and the first data processing unit (102.1) are configured to access, using the cartridge identification, the usage information logically associated with the cartridge unit (107) from the at least one second memory (106.6) for enabling the material processing apparatus to use the cartridge unit (107).

9. A data processing device, **characterized in that**
- it is configured as the first data processing unit (102.1) of the system according to any of claims 1 to 8.

10. A method for controlling a system for printing an imprint on a flat material, the system comprising a cartridge unit (107) holding a usable total volume of a consumable and a material processing device (102, 103, 104), in particular a franking machine, which comprises a printing device (102.6) designed to use the cartridge unit (107) and a first data processing unit (102.1) connected to the printing device (102.6) for controlling the use of the cartridge unit (107) for printing the imprint, wherein
- the material processing device (102, 103, 104) detects an insertion of the cartridge unit (107) into the printing device (102.6),
- the material processing device (102, 103, 104) generates current consumption information representative of the use of the cartridge unit (107) by the printing device (102.6) since its insertion,
- a unique cartridge identification of the cartridge unit is stored in a first memory (107.1) of the cartridge unit (107) in a non-volatile, in particular unchangeable, manner,
- the usable total volume defines one or more of consumable volumes of the cartridge unit (107),
wherein
- the first data processing unit (102.1) initiates, at least when at least one predeterminable usage-relevant event occurs, a storage of a current use-related information generated by means of the current consumption information logically linked to the cartridge identification in at least one second memory (102.3, 106.6), the usage-relevant event being relevant for the use of the cartridge unit (107) by the printing device (102.6), and
- the first data processing unit (102.1) writes to an irreversibly writable memory area (111.1, 111.2) of the first memory (107.1) when the usage-relevant event occurs in order to mark a consumable volume associated to the memory area (111.1, 111.2) as consumed,
wherein
- the consumable volume associated to the memory area (111.1, 111.2) is still usable when the at least one predeterminable usage-relevant event occurs and is freed for usage by the first data processing unit (102.1) using the current use-information.

11. The method according to claim 10, wherein
- the at least one usage-relevant event is a first use of the cartridge unit (107) after insertion
and/or
- the at least one usage-relevant event is the reaching of a predeterminable consumption value since the insertion
and/or
- the at least one usage-relevant event is the reaching of a predeterminable consumption value since an immediately preceding usage-relevant event
and/or
- the at least one usage-relevant event is the receipt of a removal command for removing the cartridge unit (107) from the printing device (102.6).

12. The method according to claim 10 or 11, wherein
- the first memory (107.1) comprises a plurality of N irreversibly writable memory areas (111.1, 111.2) and
- the first data processing unit (102.1) writes to the memory areas (111.1, 111.2) in a sequence, in particular in a predeterminable sequence, when usage-relevant events occur,
wherein, in particular,
- at least some of the memory areas (111.1, 111.2) are physically and/or logically combined to form a memory area group (111.3) which has at least one first memory area (111.1) and at least one second memory area (111.2), and the first data processing unit (102.1) writes to the first memory area (111.1) when a usage-relevant event occurs and blocks use of the cartridge unit (107) by the printing device (102.6) if all the first memory areas (111.1) of the memory area group (111.3) are written to and the at least one second memory area (111.2) of the memory area group (111.3) is not written to, wherein the at least one second memory area (111.2), in particular, cannot be written to by the first data processing unit (102.1),
and/or
- at least a first part of the memory areas (111.1, 111.2) is physically and/or logically combined to form a first memory area group (111.3) and at least a second part of the memory areas (111.1, 111.2) is physically and/or logically combined to form a second memory area group (111.3), wherein the respective memory area group (111.3) has at least a first memory area (111.1) and at least a second memory area (111.2), and the first data processing unit (102.1) allows further use of the cartridge unit (107) by the printing device (102.6) when all the first and second memory areas (111.1, 111.2) of the first memory area group (111.3) are written to, and the second memory area group (111.3) has at least one unwritten first memory area (111.1), the first data processing unit (102.1) writing to a first memory area (111.1) of the second memory area group (111.3), in particular, when a usage-relevant event occurs after a written-to second memory area (111.2) of the first memory area group (111.3) has been detected for the first time,
and/or
- at least some of the memory areas (111.1, 111.2) are physically and/or logically combined to form at least one memory area group (111.3) which has at least one first memory area (111.1) and at least one second memory area (111.2), a first memory area (111.1) being writable to by the first data processing unit (102.1) and a second memory area (111.2) not being writable to by the first data processing unit (102.1) but only by an authorized refiller of the cartridge unit (107).

13. The method according to claim 12, wherein
- the first data processing unit (102.1) writes to one of the memory areas (111.1, 111.2) when the cartridge unit (107) is used for the first time after insertion and/or when a predeterminable consumption value is reached, and
- the first data processing unit (102.1) causes a memory area identification of the written-to memory area (111.1, 111.2) to be stored logically associated with the cartridge identification in the at least one second memory (102.3, 106.6),
wherein, in particular,
- the first data processing unit (102.1) causes the memory area identification of the described memory area (111.1, 111.2) to be stored logically linked to a unique material processing apparatus identification of the material processing apparatus (102, 103, 104)
and/or
- the first data processing unit (102.1) logically assigns to the described memory area (111.1, 111.2) a consumption quantity information which is representative of a consumption quantity of consumable of the cartridge unit (107) assigned to the written-to memory area, and releases use of the cartridge unit (107) as a function of the consumption quantity information and the current consumption information until the consumption quantity assigned to the written-to memory area (111.1, 111.2) is reached.

14. The process according to any of Claims 10 to 13, wherein
- the at least one second memory is a memory (102.3) of the material processing device (102, 103, 104)
and/or
- the at least one second memory is a memory (106.6) of a data center (106) which is remote from the material processing device and which can be connected to the first data processing unit (102.1) via a communication network (105), the first data processing unit (102.1), in particular, transmitting the current usage information linked to the cartridge identification and to a unique material processing device identification of the material processing device (102, 103, 104) to the remote data center (106),
and/or
- the current usage information corresponds to the current consumption information or the current usage information is residual quantity information that is representative of the remaining residual quantity of consumable of the cartridge unit (107) and is determined using the current consumption information,
and/or
- the at least one second memory (102.3, 106.6) stores a plurality of cartridge data sets, each cartridge data set comprising at least one usage information and one cartridge identification for a cartridge unit (107), the cartridge data set, in particular, comprising at least one unique material processing device identification of the material processing device (102, 103, 104) assigned to the usage information and from which current usage information originates.

15. The process according to any of Claims 10 to 14, wherein
- the first data processing unit (102.1) is triggered by inserting the cartridge unit (107) into the material processing device to interrogate, using the cartridge identification, from a remote data center (106) stored residual amount information associated with the cartridge unit (107) representative of a remaining residual amount of consumable of the cartridge unit (107), and
- the first data processing unit (102.1) releases use of the cartridge unit (107) in dependence on the residual quantity information obtained and the current consumption information until a predeterminable minimum residual quantity is reached,
wherein, in particular,
- the first data processing unit (102.1) determines an updated residual quantity information using the received residual quantity information and the current consumption information at least when the at least one usage-relevant event occurs and transmits it as the current usage information to the remote data center (106),
and/or
- the first data processing unit (102.1), after the cartridge unit (107) has been inserted into the material processing device, releases use of the cartridge unit (107) only until a standard consumption has been reached unless the retrieved stored residual quantity information is received from the remote data center (106), the standard consumption, in particular, corresponding at most to the minimum residual quantity, preferably being smaller than the minimum residual quantity.

16. The method according to any of Claims 10 to 15, wherein
- a data center (106) remote from the material processing apparatus is connected to the first data processing unit (102.1) via a communication network and comprises the at least one second memory (106.6),
wherein, in particular,
- the data center and the first data processing unit (102.1), using the cartridge identification, access the usage information logically associated with the cartridge unit (107) from the at least one second memory (106.6) for enabling the material processing device to use the cartridge unit (107).

## Revendications

1. Système (101) pour imprimer une empreinte sur un matériau plat, comprenant
- une unité de cartouche (107) contenant un volume usable total d'un consommable, notamment de l'encre, et
- au moins un dispositif de traitement de matériau (102, 103, 104), notamment une machine à affranchir, qui comporte un dispositif d'impression (102.6) destiné à utiliser l'unité de cartouche (107) et une première unité de traitement de données (102.1) reliée au un dispositif d'impression (102.6) pour contrôler l'utilisation de l'unité de cartouche (107) pour créer l'empreinte,
dans lequel
- le dispositif de traitement de matériau (102, 103, 104) est configuré pour détecter l'insertion de l'unité de cartouche (107) dans le dispositif d'impression (102.6),
- le dispositif de traitement de matériau (102, 103, 104) est configuré pour générer une information de consommation actuelle qui est représentative de l'utilisation de l'unité de cartouche (107) par le dispositif d'impression (102.6) depuis son insertion,
- l'unité de cartouche (107) présente une première mémoire (107.1) dans laquelle une identification de cartouche unique de l'unité de cartouche est stockée de manière non volatile, en particulier non modifiable,
- le volume usable total du consommable définit un ou plusieurs volumes de consommation de l'unité de cartouche (107),
dans lequel
- la première unité de traitement de données (102.1) est configurée pour initier, au moins à l'occurrence d'au moins un événement prédéfinissable relatif à l'utilisation, le stockage, de manière logiquement liée à l'identification de cartouche, d'une information d'utilisation actuelle générée au moyen des informations de consommation actuelles, dans au moins une deuxième mémoire (102.3, 106.6), l'événement relatif à l'utilisation étant pertinent pour l'utilisation de l'unité de cartouche (107) par le dispositif d'impression (102.6), et
- la première unité de traitement de données (102.1) est configurée pour écrire dans une zone de mémoire (111.1, 111.2) inscriptible de façon irréversible de la première mémoire (107.1) à l'occurrence de l'événement pertinent pour l'utilisation, pour marquer un volume de consommation associé à la zone de mémoire (111.1, 111.2) comme consommé
dans lequel
- le volume de consommation associé à la zone de mémoire (111.1, 111.2), à l'occurrence de l'événement pertinent pour l'utilisation, est encore utilisable et peut être libéré pour l'utilisation par la première unité de traitement de données (102.1) utilisant l'information d'utilisation actuelle.

2. Système selon la revendication 1, dans lequel
- l'au moins un événement pertinent pour l'utilisation est une première utilisation de l'unité de cartouche (107) après insertion
et/ou
- l'au moins un événement pertinent pour l'utilisation est l'atteinte d'une valeur prédéfinissable de consommation depuis le début
et/ou
- l'au moins un événement pertinent pour l'utilisation est l'atteinte d'une valeur de consommation prédéfinissable depuis un événement pertinent pour l'utilisation immédiatement précédent
et/ou
- l'au moins un événement pertinent pour l'utilisation est la réception d'une commande de retrait pour retirer l'unité de cartouche (107) du dispositif d'impression (102.6).

3. Système selon la revendication 1 ou 2, dans lequel
- la première mémoire (107.1) comporte une pluralité de N zones de mémoire inscriptibles de manière irréversible (111.1, 111.2) et
- l'unité de traitement de données (102.1) est configurée pour écrire, dans une séquence, en particulier prédéfinissable, dans les zones de mémoire (111.1, 111.2) lorsque des événements pertinents pour l'utilisation se produisent
dans lequel, en particulier,
- la première mémoire (107.1) comporte une pluralité de N = 10 à 100, de préférence N = 15 à 50, plus préférentiellement N = 20 à 30, zones de mémoire inscriptibles de manière irréversible (111.1, 111.2)
et/ou
- la première mémoire (107.1) est divisée, physiquement et/ou logiquement, en une pluralité de M groupes de zones mémoire (111.3), chacun avec une pluralité de zones mémoire inscriptibles de manière irréversible (111.1, 111.2), la première mémoire (107.1) comportant notamment une pluralité de M = 2 à 20, de préférence M = 3 à 10, plus préférablement M = 5 à 8, groupes de zones de mémoire (111.3),
et/ou
- au moins une zone de mémoire inscriptible de manière irréversible (111.1, 111.2), notamment chaque zone mémoire inscriptible de manière irréversible (111.1, 111.2), comporte au moins un bit, notamment exactement un bit.

4. Système selon la revendication 3, dans lequel
- au moins une partie des zones de mémoire (111.1, 111.2) sont combinées, physiquement et/ou logiquement, pour former un groupe de zones mémoire (111.3) qui a au moins une première zone de mémoire (111.1) et au moins une seconde zone de mémoire (111.2), la première unité de traitement de données (102.1) est configurée pour écrire dans une première zone de mémoire (111.1) à l'occurrence d'un événement relatif à l'utilisation et pour bloquer l'utilisation de l'unité de cartouche (107) par le dispositif d'impression (102.6) si toute la première zone de mémoire (111.1) du groupe de zones de mémoire (111.3) a été écrite et l'au moins une deuxième zone de mémoire (111.2) du groupe de zones de mémoire (111.3) n'est pas écrite, la première unité de traitement de données (102.1) et/ ou l'au moins une deuxième zone de mémoire (111.2) étant configurée, en particulier, de telle manière que l'au moins une deuxième zone de mémoire (111.2) ne put pas être écrite par la première unité de traitement de données (102.1),
et/ou
- au moins une première partie des zones de mémoire (111.1, 111.2) est combinée, physiquement et/ou logiquement, en un premier groupe de zones de mémoire (111.3) et au moins une seconde partie des zones de mémoire (111.1, 111.2) est combinée, physiquement et /ou logiquement, en un deuxième groupe de zones de mémoire (111.3) est combiné, le groupe de zones mémoire respectif (111.3) ayant au moins une première zone de mémoire (111.1) et au moins une deuxième zone de mémoire (111.2), la première unité de traitement de données ( 102.1) étant configuré pour permettre une utilisation ultérieure de l'unité de cartouche (107) par le dispositif d'impression (102.6) lorsque toutes les premières et secondes zones de mémoire (111.1, 111.2) du premier groupe de zones de mémoire (111.3) ont été écrites et le deuxième groupe de zones de mémoire (111.3) comporte au moins une première zone de mémoire non écrite (111.1), la première unité de traitement de données (102.1) étant configurée notamment pour écrire, à l'occurrence première d'un événement pertinent pour l'utilisation après qu'il a été enregistrée, pour la première fois qu'une deuxième zone de mémoire (111.2) du premier groupe de zones de mémoire (111.3) est écrite, une première zone de mémoire (111.1) de la deuxième groupe de zones de mémoire (111.3),
et/ou
- au moins une partie des zones de mémoire (111.1, 111.2) sont combinées, physiquement et/ou logiquement, pour former au moins un groupe de zones de mémoire (111.3), qui a au moins une première zone de mémoire (111.1) et au moins une deuxième zone de mémoire (111.2), les zones de mémoire (111.1, 111.2) sont configurées de sorte qu'une première zone de mémoire (111.1) peut être écrite par la première unité de traitement de données (102.1) et qu'une seconde zone de mémoire (111.2) ne peut pas être écrite par la première unité de traitement de données (102.1) mais uniquement par un rechargeur autorisé de l'unité de cartouche (107).

5. Système selon la revendication 3 ou 4, dans lequel
- la première unité de traitement de données (102.1) est configurée pour écrire dans l'une des zones de mémoire (111.1, 111.2) lorsque l'unité de cartouche (107) est utilisée pour la première fois après insertion et/ou lorsqu'une valeur de consommation prédéfinissable est atteinte et
- la première unité de traitement de données (102.1) est configurée pour causer le stockage d'une identification de zone de mémoire de la zone mémoire écrite (111.1, 111.2) logiquement liée à l'identification de cartouche dans l'au moins une seconde mémoire (102.3, 106.6),
dans lequel, en particulier,
- la première unité de traitement de données (102.1) est configurée pour causer le stockage de l'identification de zone de mémoire de la zone de mémoire écrite (111.1, 111.2) logiquement liée à une identification unique du dispositif de traitement de matériau du dispositif de traitement de matériau (102, 103, 104) ,
et/ou
- la première unité de traitement de données (102.1) est configurée pour attribuer logiquement une information de quantité de consommation à la zone de mémoire écrite (111.1, 111.2), qui est représentative d'une quantité de consommation de consommable de l'unité de cartouche (107) affectée à la zone de mémoire écrite (111.1, 111.2), et de libérer une utilisation de l'unité de cartouche (107) en fonction de l'informations de quantité de consommation et de l'informations de consommation actuelle jusqu'à ce que la quantité de consommation attribuée à la zone de mémoire (111.1, 111.2) écrite soit atteinte.

6. Système selon l'une quelconque des revendications 1 à 5, dans lequel
- l'au moins une deuxième mémoire est une mémoire (102.3) du dispositif de traitement de matériau (102, 103, 104)
et/ou
- l'au moins une deuxième mémoire est une mémoire (106.6) d'un centre de données (106) distant du dispositif de traitement de matériau, qui peut être connecté à l'unité de traitement de données (102.1) via un réseau de communication (105), l'unité de traitement de données (102.1) étant configurée notamment pour transmettre, au centre de données distant (106), des informations d'utilisation actuelles liées à l'identification de cartouche et une identification unique du dispositif de traitement de matériau (102, 103, 104)
et/ou
- l'information d'utilisation actuelle correspond à l'information de consommation actuelle ou l'information d'utilisation actuelle correspond à une information de quantité résiduelle qui est représentative de la quantité résiduelle de consommables restante dans l'unité de cartouche (107) et a été déterminée à l'aide de l'information de consommation actuelle,
et/ou
- l'au moins une deuxième mémoire (102.3, 106.6) est configurée pour stocker une pluralité d'enregistrements de données de cartouche, chaque enregistrement de données de cartouche comprenant au moins une information d'utilisation et une identification de cartouche pour une unité de cartouche (107), l'enregistrement de données de cartouche comportant en particulier au moins une identification de dispositif de traitement de matériau unique du dispositif de traitement de matériau attribuée aux informations d'utilisation (102, 103, 104) d'où proviennent les informations d'utilisation actuelles.

7. Système selon l'une quelconque des revendications 1 à 6, dans lequel
- l'unité de traitement de données (102.1) est configurée pour, déclenchée par une insertion de l'unité de cartouche (107) dans le dispositif de traitement de matériau et à l'aide de l'identification de cartouche, demander à un centre de données distant (106) une information de quantité résiduelle stockées attribuées a l'unité de cartouche (107), qui est représentative d'une quantité résiduelle de l'unité de cartouche (107) restante consommable, et
- l'unité de traitement de données (102.1) est configurée pour permettre l'utilisation de l'unité de cartouche (107) en fonction de l'information de quantité restante reçue et de l'information de consommation actuelle jusqu'à ce qu'une quantité restante minimale prédéterminée soit atteinte,
où, en particulier,
- l'unité de traitement de données (102.1) est configurée pour déterminer une information de quantité restante mise à jour à l'aide de l'information de quantité restante reçue et de l'information de consommation actuelle, au moins lorsque l'au moins un événement pertinent pour l'utilisation se produit, et pour la transmettre au centre de données distant (106) comme l'information d'utilisation actuelle,
et/ou
- la première unité de traitement de données (102.1) est configurée pour libérer, après que l'unité de cartouche (107) a été insérée dans le dispositif de traitement de matériau et jusqu'à ce que l'information de quantité restante stockée demandée soit reçue du centre de données à distance (106), l'utilisation de l'unité de cartouche (107) uniquement jusqu'à ce qu'une consommation standard soit atteinte, la consommation standard correspondant notamment au plus à la quantité minimale restante, et étant de préférence inférieure à la quantité minimale restante.

8. Système selon l'une quelconque des revendications 1 à 7, dans lequel
- un centre de données (106) distant du dispositif de traitement de matériau est prévu, qui peut être connecté à la première unité de traitement de données (102.1) via un réseau de communication et comprend l'au moins une deuxième mémoire (106.6),
dans lequel, en particulier,
- le centre de données (106) et la première unité de traitement de données (102.1) sont configurés, pour libérer l'utilisation de l'unité de cartouche (107) par le dispositif de traitement de matériau, à accéder, en utilisant l'identification de cartouche, l'information d'utilisation logiquement attribuée à l'unité de cartouche (107) à partir de l'au moins une deuxième mémoire (106.6).

9. Dispositif de traitement de données, **caractérisé en ce que**
- il est conçu comme la première unité de traitement de données (102.1) du système selon l'une quelconque des revendications 1 à 8.

10. Procédé de commande d'un système (101) pour imprimer une empreinte sur un matériau plat, le système comprenant une unité de cartouche (107) contenant un volume usable total d'un consommable, notamment de l'encre, et au moins un dispositif de traitement de matériau (102, 103, 104), notamment une machine à affranchir, qui comporte un dispositif d'impression (102.6) destiné à utiliser l'unité de cartouche (107) et une première unité de traitement de données (102.1) reliée au un dispositif d'impression (102.6) pour contrôler l'utilisation de l'unité de cartouche (107) pour créer l'empreinte, dans lequel
- le dispositif de traitement de matériau (102, 103, 104) détecte l'insertion de l'unité de cartouche (107) dans le dispositif d'impression (102.6),
- le dispositif de traitement de matériau (102, 103, 104) génère une information de consommation actuelle qui est représentative de l'utilisation de l'unité de cartouche (107) par le dispositif d'impression (102.6) depuis son insertion,
- l'unité de cartouche (107) présente une première mémoire (107.1) dans laquelle une identification de cartouche unique de l'unité de cartouche est stockée de manière non volatile, en particulier non modifiable,
- le volume usable total du consommable définit un ou plusieurs volumes de consommation de l'unité de cartouche (107),
dans lequel
- la première unité de traitement de données (102.1) initie, au moins à l'occurrence d'au moins un événement prédéfinissable relatif à l'utilisation, le stockage, de manière logiquement liée à l'identification de cartouche, d'une information d'utilisation actuelle générée au moyen des informations de consommation actuelles, dans au moins une deuxième mémoire (102.3, 106.6), l'événement relatif à l'utilisation étant pertinent pour l'utilisation de l'unité de cartouche (107) par le dispositif d'impression (102.6), et
- la première unité de traitement de données (102.1) écrit dans une zone de mémoire (111.1, 111.2) inscriptible de façon irréversible de la première mémoire (107.1) à l'occurrence de l'événement pertinent pour l'utilisation, pour marquer un volume de consommation associé à la zone de mémoire (111.1, 111.2) comme consommé
dans lequel
- le volume de consommation associé à la zone de mémoire (111.1, 111.2), à l'occurrence de l'événement pertinent pour l'utilisation, est encore utilisable et est libéré pour l'utilisation par la première unité de traitement de données (102.1) utilisant l'information d'utilisation actuelle.

11. Procédé selon la revendication 10, dans lequel
- l'au moins un événement pertinent pour l'utilisation est une première utilisation de l'unité de cartouche (107) après insertion
et/ou
- l'au moins un événement pertinent pour l'utilisation est l'atteinte d'une valeur prédéfinissable de consommation depuis le début
et/ou
- l'au moins un événement pertinent pour l'utilisation est l'atteinte d'une valeur de consommation prédéfinissable depuis un événement pertinent pour l'utilisation immédiatement précédent
et/ou
- l'au moins un événement pertinent pour l'utilisation est la réception d'une commande de retrait pour retirer l'unité de cartouche (107) du dispositif d'impression (102.6).

12. Procédé selon la revendication 10 ou 11, dans lequel
- la première mémoire (107.1) comporte une pluralité de N zones de mémoire inscriptibles de manière irréversible (111.1, 111.2) et
- l'unité de traitement de données (102.1) écrit, dans une séquence, en particulier prédéfinissable, dans les zones de mémoire (111.1, 111.2) lorsque des événements pertinents pour l'utilisation se produisent
dans lequel, en particulier,
- au moins une partie des zones de mémoire (111.1, 111.2) sont combinées, physiquement et/ou logiquement, pour former un groupe de zones mémoire (111.3) qui a au moins une première zone de mémoire (111.1) et au moins une seconde zone de mémoire (111.2), la première unité de traitement de données (102.1) écrit dans une première zone de mémoire (111.1) à l'occurrence d'un événement relatif à l'utilisation et pour bloquer l'utilisation de l'unité de cartouche (107) par le dispositif d'impression (102.6) si toute la première zone de mémoire (111.1) du groupe de zones de mémoire (111.3) a été écrite et l'au moins une deuxième zone de mémoire (111.2) du groupe de zones de mémoire (111.3) n'est pas écrite, la première unité de traitement de données (102.1) et/ ou l'au moins une deuxième zone de mémoire (111.2) étant configurée, en particulier, de telle manière que l'au moins une deuxième zone de mémoire (111.2) ne put pas être écrite par la première unité de traitement de données (102.1),
et/ou
- au moins une première partie des zones de mémoire (111.1, 111.2) est combinée, physiquement et/ou logiquement, en un premier groupe de zones de mémoire (111.3) et au moins une seconde partie des zones de mémoire (111.1, 111.2) est combinée, physiquement et /ou logiquement, en un deuxième groupe de zones de mémoire (111.3) est combiné, le groupe de zones mémoire respectif (111.3) ayant au moins une première zone de mémoire (111.1) et au moins une deuxième zone de mémoire (111.2), la première unité de traitement de données ( 102.1) permet une utilisation ultérieure de l'unité de cartouche (107) par le dispositif d'impression (102.6) lorsque toutes les premières et secondes zones de mémoire (111.1, 111.2) du premier groupe de zones de mémoire (111.3) ont été écrites et le deuxième groupe de zones de mémoire (111.3) comporte au moins une première zone de mémoire non écrite (111.1), la première unité de traitement de données (102.1) notamment écrit, à l'occurrence première d'un événement pertinent pour l'utilisation après qu'il a été enregistrée, pour la première fois qu'une deuxième zone de mémoire (111.2) du premier groupe de zones de mémoire (111.3) est écrite, une première zone de mémoire (111.1) de la deuxième groupe de zones de mémoire (111.3),
et/ou
- au moins une partie des zones de mémoire (111.1, 111.2) sont combinées, physiquement et/ou logiquement, pour former au moins un groupe de zones de mémoire (111.3), qui a au moins une première zone de mémoire (111.1) et au moins une deuxième zone de mémoire (111.2), les zones de mémoire (111.1, 111.2) sont configurées de sorte qu'une première zone de mémoire (111.1) peut être écrite par la première unité de traitement de données (102.1) et qu'une seconde zone de mémoire (111.2) ne peut pas être écrite par la première unité de traitement de données (102.1) mais uniquement par un rechargeur autorisé de l'unité de cartouche (107).

13. Procédé selon la revendication 12, dans lequel
- la première unité de traitement de données (102.1) écrit dans l'une des zones de mémoire (111.1, 111.2) lorsque l'unité de cartouche (107) est utilisée pour la première fois après insertion et/ou lorsqu'une valeur de consommation prédéfinissable est atteinte et
- la première unité de traitement de données (102.1) cause le stockage d'une identification de zone de mémoire de la zone mémoire écrite (111.1, 111.2) logiquement liée à l'identification de cartouche dans l'au moins une seconde mémoire (102.3, 106.6),
dans lequel, en particulier,
- la première unité de traitement de données (102.1) cause le stockage de l'identification de zone de mémoire de la zone de mémoire écrite (111.1, 111.2) logiquement liée à une identification unique du dispositif de traitement de matériau du dispositif de traitement de matériau (102, 103, 104) ,
et/ou
- la première unité de traitement de données (102.1) attribue logiquement une information de quantité de consommation à la zone de mémoire écrite (111.1, 111.2), qui est représentative d'une quantité de consommation de consommable de l'unité de cartouche (107) affectée à la zone de mémoire écrite (111.1, 111.2), et libère une utilisation de l'unité de cartouche (107) en fonction de l'informations de quantité de consommation et de l'informations de consommation actuelle jusqu'à ce que la quantité de consommation attribuée à la zone de mémoire (111.1, 111.2) écrite soit atteinte.

14. Procédé selon l'une quelconque des revendications 10 à 13, dans lequel
- l'au moins une deuxième mémoire est une mémoire (102.3) du dispositif de traitement de matériau (102, 103, 104)
et/ou
- l'au moins une deuxième mémoire est une mémoire (106.6) d'un centre de données (106) distant du dispositif de traitement de matériau, qui peut être connecté à l'unité de traitement de données (102.1) via un réseau de communication (105), l'unité de traitement de données (102.1) notamment transmet, au centre de données distant (106), des informations d'utilisation actuelles liées à l'identification de cartouche et une identification unique du dispositif de traitement de matériau (102, 103, 104)
et/ou
- l'information d'utilisation actuelle correspond à l'information de consommation actuelle ou l'information d'utilisation actuelle correspond à une information de quantité résiduelle qui est représentative de la quantité résiduelle de consommables restante dans l'unité de cartouche (107) et a été déterminée à l'aide de l'information de consommation actuelle,
et/ou
- l'au moins une deuxième mémoire (102.3, 106.6) stocke une pluralité d'enregistrements de données de cartouche, chaque enregistrement de données de cartouche comprenant au moins une information d'utilisation et une identification de cartouche pour une unité de cartouche (107), l'enregistrement de données de cartouche comportant en particulier au moins une identification de dispositif de traitement de matériau unique du dispositif de traitement de matériau attribuée aux informations d'utilisation (102, 103, 104) d'où proviennent les informations d'utilisation actuelles.

15. Procédé selon l'une quelconque des revendications 10 à 14, dans lequel
- l'unité de traitement de données (102.1), déclenchée par une insertion de l'unité de cartouche (107) dans le dispositif de traitement de matériau et à l'aide de l'identification de cartouche, demande à un centre de données distant (106) une information de quantité résiduelle stockées attribuées a l'unité de cartouche (107), qui est représentative d'une quantité résiduelle de l'unité de cartouche (107) restante consommable, et
- l'unité de traitement de données (102.1) permet l'utilisation de l'unité de cartouche (107) en fonction de l'information de quantité restante reçue et de l'information de consommation actuelle jusqu'à ce qu'une quantité restante minimale prédéterminée soit atteinte,
où, en particulier,
- l'unité de traitement de données (102.1) détermine une information de quantité restante mise à jour à l'aide de l'information de quantité restante reçue et de l'information de consommation actuelle, au moins lorsque l'au moins un événement pertinent pour l'utilisation se produit, et la transmet au centre de données distant (106) comme l'information d'utilisation actuelle,
et/ou
- la première unité de traitement de données (102.1) libère, après que l'unité de cartouche (107) a été insérée dans le dispositif de traitement de matériau et jusqu'à ce que l'information de quantité restante stockée demandée soit reçue du centre de données à distance (106), l'utilisation de l'unité de cartouche (107) uniquement jusqu'à ce qu'une consommation standard soit atteinte, la consommation standard correspondant notamment au plus à la quantité minimale restante, et étant de préférence inférieure à la quantité minimale restante.

16. Procédé selon l'une quelconque des revendications 10 à 15, dans lequel
- un centre de données (106) distant du dispositif de traitement de matériau est connecté à la première unité de traitement de données (102.1) via un réseau de communication et comprend l'au moins une deuxième mémoire (106.6),
dans lequel, en particulier,
- le centre de données (106) et la première unité de traitement de données (102.1), pour libérer l'utilisation de l'unité de cartouche (107) par le dispositif de traitement de matériau, accèdent, en utilisant l'identification de cartouche, l'information d'utilisation logiquement attribuée à l'unité de cartouche (107) à partir de l'au moins une deuxième mémoire (106.6).
